# EUROPEAN PATENT APPLICATION

(11) **EP 1 213 678 A1**
(43) Date of publication of application: **12.06.2002**
(21) Application number: 01901439.8
(22) Date of filing: 18.01.2001
(51) Int. Cl.: G06F 17/60

(54) **GIFT INTERMEDIATING SYSTEM AND METHOD THEREFOR**

(30) Priority: 19.01.2000 JP 2000010812; 26.05.2000 JP 2000156927
(71) Applicant: Kameya Co., Ltd., Nagoya-shi, Aichi 460-0008 (JP)
(72) Inventor: OSHIMA, Ichiro, Nagoya-shi, Aichi 460-0008 (JP)
(74) Representative: Winter, Brandl, Fürniss, Hübner, Röss, Kaiser, Polte Partnerschaft
(86) International application number: JP0100318
(87) International publication number: WO0154012

(57) **Abstract**

In the case of bridal showers, for example, gift may not reflect the wish of a recipient who is expected to receive the gift. No proposed gift service systems succeed in matching the wish of the recipient of the gift with intention of a giver who desires to give the gift. The gift service system of the present invention provides a server SV having a storage device 34 that stores data regarding the gift therein. The recipient who is expected to receive the gift gains access from a first terminal 80 to the server SV and creates a registry. The recipient then selects desired items for the gift and registers a wish list of the selected items. A password to gain access to a site, in which the wish list is registered, and other required pieces of information are then transferred to one or plural potential givers who may give the gift. Each giver gains access from a second terminal 90 to the server SV with the password, selects one or a plurality of items for the gift among the items in the wish list, and offers payment for the selected gift items. The server SV receives the offer and sends the giver an invoice. Registry of the recipient and issuance of the password for the giver ensure the safe gift service of desired items via the network.

## Description

### Technical Field

The present invention relates to a gift mediation system and a corresponding gift mediation method. More specifically the present invention pertains to a technique of gaining access to data storage means, which is provided on a server and stores predetermined data therein, via a network to implement gift mediation via the network.

### Background Art

With a recent advance of the information providing technology via a network, a system of specifying items for gift to a specific recipient on the network has been applied for practical use. The system provides a server identified by an IP address on the network like the Internet and stores therein data on items, which are possible options for gift. A giver who desires to give a gift item to the specific recipient gains access to a site on the server and selects a desired item, based on the data stored in the server. The giver settles payment for the selected item by transfer to a bank account or with a credit card, while writing an address for delivery of the selected item in a specified area on the server.

The service provider of the site confirms the settlement and sends the selected item to the written address for delivery. This completes the gift of the desired item to the specific recipient. This system is utilized in various occasions, for example, seasonal greetings, celebrations like birthdays, bridal showers, baby showers, graduations, favors for such celebrations, and favors for any other events.

The prior art gift service system via the network, however, does not reflect the wish of the recipient unless the giver asks the recipient about the wish for the gift in advance. It is not a general procedure to ask the recipient what item is desired for the gift. The giver may thus not easily determine an item for the gift. In the case of a bridal shower involving many relatives and friends, the couple may receive similar items from different givers or items not at all desired by the couple.

This may be the issue of social custom. Even in the nations with the social custom that the giver generally asks the recipient about desired items for the gift, the price of a desired item by the recipient may exceed the allowable price range by the giver. This problem arises even in such nations. No effective technical infrastructure has been proposed to solve various problems in the case of giving gift individually from a large number of people to one person or one couple.

In general, items for the gift can not be specified only objectively by the type of an event for the gift (for example, wedding or baby), but should be determined comprehensively by taking into account diverse subjective factors, for example, the personalities of a recipient and a giver and the relationship between the recipient and the giver (somewhat formal or intimate). In order to maximize the usability of the gift service system via the network, the system should provide a wide range of items as potential options for the gift, which are substantially equivalent to all the items on the market, by taking into account the current and future tastes and preferences of people and tendencies of items. It is, however, practically impossible to line up all the commercially available items as the potential options for the gift, because of requirement to newly open a large number of accounts and extremely time-consuming and labor-consuming purchase and management of items.

The object of the present invention is thus to eliminate such drawbacks of the prior art technique and provide a convenient gift mediation system and a corresponding gift mediation method, which are especially effective for gift from a plurality of givers to a specific recipient.

### Disclosure of the Invention

At least part of the above and the other related objects is attained by a gift mediation system that implements gift mediation via a network through access to data storage means, which is provided on a server and stores predetermined data therein. The gift mediation system includes: first memory means that stores registry of information on a recipient, who is expected to receive gift, together with individual information used for authentication on the network; second memory means that stores a password used to authenticate a giver who desires to give the gift on the network; permission means that identifies the individual information in response to a requirement for access via the network and gives authorization to access the data storage means via the network when identity with at least part of the individual information registered in the first memory means is verified; wish list registry means that registers a wish list including at least one item for the gift into the data storage means by the authorized access; and wish list reference means that allows the wish list to be referred to by access via the network using the password stored in the second memory means.

Another application of the present invention is a gift mediation method that corresponds to the above gift mediation system. The present invention is accordingly directed to a gift mediation method of implementing gift mediation via a network through access to data storage means, which is provided on a server and stores predetermined data therein. The gift mediation method includes the steps of: storing registry of information on a recipient, who is expected to receive gift, together with individual information used for authentication on the network in a predetermined storage device of the server; storing a password used to authenticate a giver who desires to give the gift on the network in the storage device of the server; identifying the individual information in response to a requirement for access via the network and giving authorization to access the data storage means via the network when identity with at least part of the individual information registered in the storage device is verified; registering a wish list including at least one item for the gift into the data storage means by the authorized access ; and allowing the wish list to be referred to by access via the network using the password stored in the storage device.

This gift mediation technique allows the recipient, who is expected to receive the gift, to access the data storage means via the network when identity with the individual information registered in advance is verified. The recipient who has been given authorization for access registers a wish list including at least one item for the gift in the data storage means. The verified identity with the individual information is required for the registry of the wish list. This arrangement effectively prevents items from being registered in the data storage means by unauthorized accesses for fun or harassment. The giver who desires to give the gift uses a preset password and refers to the registered wish list of the at least one item via the network. This arrangement enables only the authorized giver to refer to the registered wish list and give an item desired by the recipient for the gift. Using the password to refer to the registered wish list desirably protects the giver's privacy.

The gift mediation system and the corresponding gift mediation method of the present invention may be actualized by a diversity of applications and embodiments. The following describes various applications and embodiments of the gift mediation system. The gift mediation method may be attained by equivalent applications and embodiments, although they are not specifically described.

In accordance with one preferable application of the gift mediation system, the first memory means stores registry of information on at least two recipients together with individual information on a single individual. In the case of a bridal shower, for example, a couple is the recipient who is expected to receive the gift. In this case, it is convenient to specify the individual information on a single individual and store the information on the couple together with the individual information.

In accordance with another preferable application of the gift mediation system, the first memory means further includes: event registry means that registers a type of event for the gift, for example, wedding, baby, birthday, and graduation; and means that stores registry of information on a plurality of recipients together with individual information on a single individual when the registered type of event coincides with a preset event involving the plurality of recipients, such as engagement or wedding. All the events do not involve a plurality of recipients. The arrangement of restricting the registry of information on a plurality of recipients to preset events effectively reduces potential errors of the information registry.

In one preferable embodiment of the present invention, the gift mediation system further includes : address registry means that registers an address of the giver who desires to give the gift; and notification means that notifies the address registered by the address registry means of the password and information on a procedure of gaining access to the data storage means, on completion of the registry by the wish list registry means. After the registry of the wish list, the password and the information on the procedure of gaining access can be sent to an address of the giver who desires to give the gift (for example, a postal address or an E-mail address). This arrangement desirably saves the labor of the recipient to contact the giver as well as the labor of the giver to ask the recipient the procedure of gaining access.

In the gift mediation system of the present invention, the wish list of items may be registered by one preferable application discussed below. This application uses item information storage means that individually stores information on a plurality of items. The application selects at least one item among the plurality of items stored in the item information storage means, and displays the wish list of the at least one selected item in an enumerative manner. After selection of desired items among the plurality of items stored in the item information storage means and registry, the recipient can refer to the wish list of the selected items displayed in an enumerative manner. This arrangement enables the recipient to easily check the selected items. The 'display in the enumerative manner' does not require all the items to be displayed as an integrated list . The items may be classified by the category or by the price and displayed as separate tables. One or plural tables may be displayed in a plurality of separate windows or printed on a plurality of separate sheets, according to the size of the window or the sheet. Alternatively the font size may automatically be adjusted to allow display or print of an integrated list. The display in the enumerative manner includes a display on the monitor screen and a print on paper.

One desirable procedure classifies items by the category and displays information on the items classified by the category. Even when there are a large number of items subjected to the registry, classification of the items by the category, for example, fashion, food & cooking, and home, or by the price enables the recipient to readily find desired items. The 'items' include not only articles like bags and tableware but diverse services like travel and tickets.

In one preferable embodiment according to the above application of the gift mediation system, the item information storage means stores at least information on a price of each item and a photographic image representing appearance of each item. The photographic images of the appearance of the respective items may enumeratively be displayed in a magnifiable manner. This arrangement allows magnification of the photographic image of the appearance of each item, which is a possible option for registry. The arrangement thus simultaneously satisfies the contradictory requirements, that is, increasing the quantity of information recognized at a glance to facilitate selection of desired items and checking the details of each item.

In the gift mediation system of the above application, the recipient who is expected to receive the gift selects desired items among the items registered in the advance in the data storage means provided on the server included in the system. The information on items, which are possible options for the gift, may not be present inside the system. Another preferable application obtains information on items from another data storage means, which is present on the network, together with information for identifying the another data storage means, extracts at least information on a price of each item and the information for identifying the another data storage means among the information on the items obtained by the item information acquisition means, and displays the extracted information in an enumerative manner. The display of such information in the enumerative manner helps the giver who desires to give the gift check if there is any desired item and where the desired item is purchased.

In the gift mediation system having the function of displaying the registered wish list of items in an enumerative manner, the display may include a 'Delete' button to instruct deletion of a specified item from the registered wish list. This arrangement allows the recipient to cancel the registry of any selected item.

The gift mediation system enables the giver, who desires to give the gift, to refer to the wish list of items registered by the recipient who is expected to receive the gift (and displayed, for example, in the enumerative manner). The gift mediation system may be constructed to further enable the giver to directly offer payment for a selected item via the network. This application displays the registered wish list of the at least one item in an enumerative manner, in response to access using the password, and individually accepts an offer of payment for each item included in the displayed wish list. The application may further display an offer record of the item for which the payment has been offered.

One giver may offer payment for one item or two or more items. Another application of the gift mediation system allows partial payment for a specific item included in the displayed wish list to be offered by the access using the password. Each giver may have a difficulty in paying for the whole price of an expensive article or service. In such cases, permission for partial payment facilitates the offer of payment and enables the recipient to receive an expensive item for the gift, which is generally not purchased by a single giver. This application may display a total of pay offer for the specific item. The display of the total of pay offer notifies other givers of the residual part of the payment for the specific item.

The offer of payment via the network may be followed by immediate online payment or by subsequent offline payment. In the latter case, the gift mediation system has payment demand means that requires a giver who has offered the payment to actually pay for the item for which the payment has been offered. The payment demand means may send an invoice to transfer money to a bank account or issue a bill.

The gift mediation system may further include detailed information display means that displays the registered wish list of the at least one item in an enumerative manner, as well as information for authenticating the giver who has offered the payment with regard to the item for which the payment has been offered, in response to the access via the network authorized by the permission means. This arrangement enables the recipient, who is expected to receive the gift, to check the information via the network and to be notified of the name of the giver who plans to buy each item for the gift.

Another preferable application of the gift mediation system stores a due time of access to the data storage mean, and notifies a registrant who has registered the wish list of information on the item for which the payment has been offered after elapse of the due time. This arrangement enables the registrant who has registered the wish list for the gift to be notified of the selected items for the gift after the elapse of the due time.

The recipient who is expected to receive the gift may fetch the selected items for the gift. In one preferable embodiment of the gift mediation system, however, the first memory means stores registry of an address for delivery of the item for which the payment has been offered and a postal address of the recipient who is expected to receive the gift, as the information on the recipient. In this case, the selected item is delivered to the registered address for delivery. In the case of a bridal shower, the current postal address of the recipient who has registered the wish list of items for the gift is often different from a postal address of the couple after the wedding. This arrangement readily deals with such cases.

The present invention is also directed to another gift mediation system that implements gift mediation via a network through access to data storage means, which is provided on a server and stores predetermined data therein. The gift mediation system includes: memory means that stores registry of information on a recipient, who is expected to receive gift, together with individual information used for authentication on the network; authentication means that authenticates a giver who desires to give the gift on the network; first permission means that identifies the individual information in response to a requirement for access via the network and gives authorization to access the data storage means via the network when identity with at least part of the individual information registered in the memory means is verified; wish list registry means that specifies a wish list including at least one item for the gift, based on information regarding items other than the predetermined data stored in the data storage means, after the access authorized by the first permission means, and registers information on the specified wish list in the data storage means; and wish list reference means that allows the wish list to be referred to by access identified on the network by the authentication means.

Another application of the present invention is a gift mediation method that corresponds to the above gift mediation system. The present invention is accordingly directed to a gift mediation method of implementing gift mediation via a network through access to data storage means, which is provided on a server and stores predetermined data therein. The gift mediation method includes the steps of: storing registry of information on a recipient, who is expected to receive gift, together with individual information used for authentication on the network in a predetermined storage device of the server; authenticating a giver who desires to give the gift on the network; identifying the individual information in response to a requirement for access via the network and giving authorization to access the data storage means via the network when identity with at least part of the individual information registered in the memory means is verified; specifying a wish list including at least one item for the gift, based on information regarding items other than the predetermined data stored in the data storage means, after the authorized access, and registering information on the specified wish list in the data storage means; and allowing the wish list to be referred to by access identified on the network.

The 'predetermined data stored in the data storage means' includes program data to attain communication via the network and a diversity of data required for effecting the gift mediation system, such as individual information and data on the password. The 'predetermined data stored in the data storage means' may further include data on the product name, the product number, and the photographic image of each item for gift.

This gift mediation technique gives authorization to access the data storage means via the network when the identity with the individual information is verified. After the authorized access, the wish list registry means specifies a wish list including at least one item for the gift, based on information regarding items other than the predetermined data stored in the data storage means, and registers information on the specified wish list in the data storage means. This arrangement enables the items whose data are not stored in the data storage means to be registered for the gift, thus extending the range of selection of items for the gift and ensuring gift of items truly desired by the recipient who is expected to receive the gift.

The gift mediation system and the corresponding gift mediation method of the present invention may be actualized by a diversity of applications and embodiments. The following describes various applications and embodiments of the gift mediation system. The gift mediation method may be attained by equivalent applications and embodiments, although they are not specifically described.

In accordance with one preferable application, the gift mediation system further includes: second permission means that gives authorization to access another data storage means, which is connected to the data storage means via the network, after the authorized access to the data storage means; and item information acquisition means that obtains information on items stored in the another data storage means, in response to a specified instruction. In this application, the wish list registry means specifies the wish list of the at least one item for the gift, based on the information obtained by the item information acquisition means, and registers the information on the specified wish list in the data storage means. This arrangement enables desired items to be selected among another group of items available on the network and registered for the gift by one access to the data storage means. The recipient who is expected to receive the gift can thus find the desired items without going out.

One preferable procedure obtains information on description of respective items, such as product names and product numbers of the items, as well as information on an address, at which the information on the items is stored in the another data storage means. This arrangement desirably enables the recipient, who is expected to receive the gift, to readily and accurately specify the desired items on the network.

In accordance with one preferable embodiment of the above application, the data storage means stores in advance information on items as the predetermined data. The item information acquisition means obtains both the information on the items stored in advance in the data storage means and the information on the items stored in the another data storage means. The wish list registry means registers both the information obtained by the item information acquisition means on a common list in the data storage means. This arrangement ensures total management of registered items even when the recipient who is expected to receive the gift has registered the desired items selected from both the data storage means and the another data storage means. This is especially effective for management of items in the case of registry of a large number of items.

In one concrete arrangement of this embodiment, the gift mediation system has display means that displays the information registered on the common list in the data storage means in an enumerative manner. This arrangement enables the recipient, who is expected to receive the gift, to readily check the registered wish list of items, while enabling the giver, who desires to give the gift, to select desired items for the gift by simply referring to the common list.

In still another preferable embodiment, the gift mediation system includes settlement means that settles an account of each item included in the wish list, whose information is registered by the wish list registry means, between the server managing the data storage means and another server managing the another data storage means via the network. The settlement means substitutes for the giver who desires to give the gift. The items in the wish list specified by the recipient, who is expected to receive the gift, can thus be kept aside, prior to actual payment by the giver who desires to give the gift.

In accordance with another preferable embodiment of the gift mediation system, a terminal that gains access to the data storage means via the network is installed at a shop of a retailer who sells items. The wish list registry means specifies the wish list of the at least one item for the gift, based on information on items checked at the shop by the recipient who is expected to receive the gift, after access authorized by the terminal, and registers information on the specified wish list in the data storage means. This embodiment enables the recipient, who is expected to receive the gift, to actually check items at the shop and select desired items for the gift. The recipient can thus receive the items of desired quality.

Another application of the present invention is a recording medium with a program recorded therein to gain access to data storage means provided on a server via a network and register items for gift in the data storage means.

More specifically the present invention is directed to a recording medium, in which a program is recorded in a computer readable manner. The program is executed to gain access to data storage means, which is provided on a server and stores predetermined data therein, via a network and register an item for gift in the data storage means. The program causes a computer to attain the functions of: obtaining information on items stored in another data storage means by access to the another data storage means that is different from the data storage means, in response to a predetermined instruction; and specifying a wish list including at least one item for the gift, based on the obtained information, and registering information on the specified wish list in the data storage means.

The program recorded in the recording medium is read and executed by the computer. The computer executes the program to register the wish list of items for the gift in the data storage means. The program executed by the computer enables even items, whose information is stored in another data storage means, to be readily registered for the gift in the data storage means.

The program that is recorded in the recording medium to attain the respective functions may be accumulated and stored in a server connecting with the network and downloaded to a computer, which executes the program, according to the requirements. Such a server and transmission of the program from the server via a public communication line are also embodiments of the recording medium of the present invention.

### Brief Description of the Drawings

Fig. 1 illustrates the hardware configuration to actualize a gift service system in one embodiment of the present invention;
Fig. 2 is a block diagram illustrating the contents of the gift service system;
Fig. 3 is a flowchart showing a registry service routine;
Fig. 4 is a flowchart showing a gift item specification service routine;
Fig. 5 is a flowchart showing a shipment management service routine;
Fig. 6 shows an initial window displayed first on a display in response to access to a server SV;
Fig. 7 shows a window for host registry;
Fig. 8 shows an example of entry in the window for host registry;
Fig. 9 shows a registry confirmation window appearing on completion of the host registry;
Fig. 10 shows a window for entering a host site;
Fig. 11 shows an information window of the host site;
Fig. 12 shows a window for recipient registry;
Fig. 13 shows an index page for wish list registry;
Fig. 14 shows a window displaying a catalog of items;
Fig. 15 shows a wish list of selected items;
Fig. 16 shows a window for entering a guest site;
Fig. 17 shows a window displaying a wish list of gift items;
Fig. 18 shows a gift item list;
Fig. 19 shows a window for changing the wish list;
Fig. 20 is a block diagram illustrating the contents of a gift service system in a first embodiment;
Fig. 21 is a flowchart showing a wish list registry service routine A;
Fig. 22 shows an information window of a purchase site;
Fig. 23 shows a sub-browser SD displayed on the display 80b;
Fig. 24 shows selection of an item on the sub-browser SD;
Fig. 25 shows registry of the selected item on the sub-browser SD;
Fig. 26 shows a window displaying a wish list of gift items;
Fig. 27 is a block diagram illustrating the contents of a gift service system in a second embodiment;
Fig. 28 is a flowchart showing a wish list registry service routine B;
Fig. 29 shows a window for entering a selected item, which is displayed in response to a click of a 'Featured Items of T Department Store', tab ZH;
Fig. 30 shows the window for entering the selected item after description of item information by a worker of the T department store; and
Fig. 31 shows a window displaying a wish list of gift items.

### Best Modes of Carrying Out the Invention

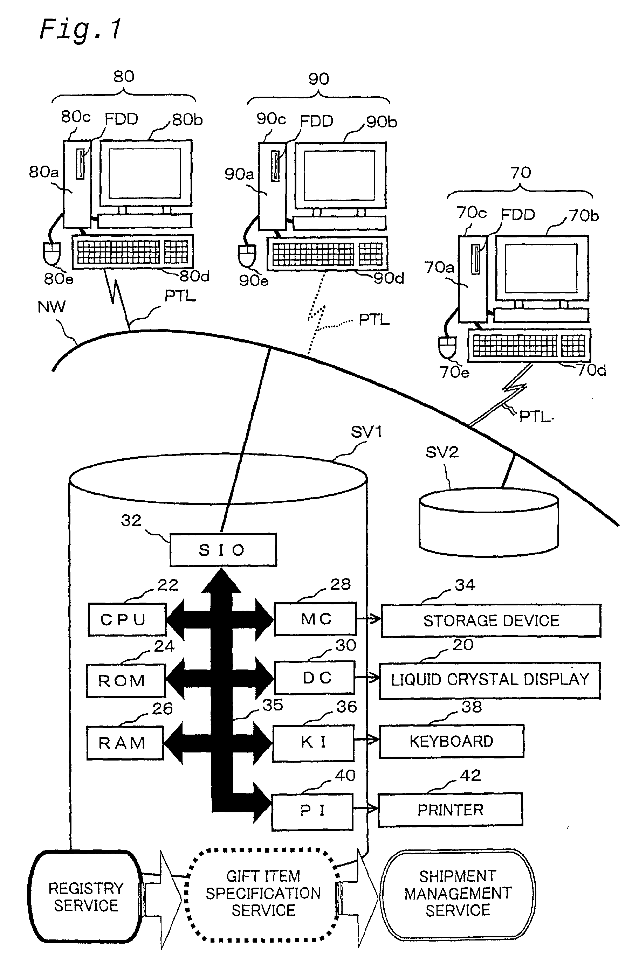

In order to elucidate the configurations and the functions of the present invention, some modes of carrying out the present invention are discussed below as embodiments. Fig. 1 illustrates the hardware configuration to actualize a gift service system, which is one embodiment of the gift mediation system of the present invention. In the gift service system, an individual who is expected to receive some gift (hereinafter referred to as the recipient) from another specific individual registers one or a plurality of desired items on a network. The another specific individual who has been informed of the registration gains access to the network and selects an item for the gift among the registered items. The selected item is then actually sent to the recipient. In the common social custom, receipt of items for the purpose of celebration or the like is regarded as presentation or gift. In the specification hereof, however, receiving items by presentation or gift is referred to as 'receipt' in the wide sense.

In the case of bridal showers, guests who have informed of a wedding often select items for bridal gift. The gift service system provides such guests with adequate information on the bridal gift according to their beloved couple's wish.

Referring to Fig. 1, the hardware configuration to actualize the gift service system includes a first terminal 80 operated by the recipient for access, a second terminal 90 operated for access by a person who desires to give one or plural items for gift (hereinafter referred to as the giver or the guest), a third terminal 70 operated for access by an entity that sells items for gift (hereinafter referred to as the retailer), a server SV2 owned by an entity that sells items on a network NW (hereinafter referred to as the net retailer), and a server SV1 owned by an entity that provides gift service including registry of information on the items for gift (hereinafter referred to as the service provider). The gift service system may include both the third terminal 70 and the server SV2 as the hardware constituents, exclude both the third terminal 70 and the server SV2, or include either one of the third terminal 70 and the server SV2. Among some modes for carrying out the present invention, the structure including the third terminal 70 as the hardware constituent is discussed in first and third embodiments, whereas the structure including the server SV2 as the hardware constituent is discussed in a second embodiment.

The first terminal 80, the second terminal 90, and the third terminal 70 are desk-top personal computer systems, which respectively include computers 80c, 90c, and 70c, each having a CPU, a ROM, and a RAM, hard disks 80a, 90a, and 70a, displays 80b, 90b, and 70b, keyboards 80d, 90d, and 70d, and mice 80e, 90e, and 70e.

Serial ports of the computers 80c, 90c, and 70c are connected to a public telephone line PTL via a modem (not illustrated) as shown by the solid line, the dotted line, and the double line in Fig. 1. The first terminal 80, the second terminal 90, and the third terminal 70 are connected to an external network NW via the public telephone line PTL. Alternatively these terminals may directly be connected to the network using an exclusive line. A typical example of the network is the Internet.

The server SV1 is constructed as a computer that receives requirements output from the first terminal 80, the second terminal 90, and the third terminal 70 via the network NW and processes these requirements. The computer has a CPU 22 that executes a diversity of operations, a ROM 24, a RAM 26, a memory controller 28, a display controller 30, a serial input-output interface 32, a storage device 34, a keyboard interface 36, and a printer interface 40, which are mutually connected via a bus 35. The ROM 24 stores programs and reference data required for the execution of the diverse operations by the CPU 22. Specifically the ROM 24 stores programs relating to registration of information on the recipient and specification of items for gift to the recipient as discussed below. The RAM 26 temporarily stores a variety of data required for the execution of the diverse operations by the CPU 22.

The memory controller (MC) 28 controls output of signals to the storage device 34. The storage device 34 stores a diversity of programs, which are loaded to the RAM 26 and executed according to the requirements, data regarding items as possible options for gift and the retailer, and externally input data on the recipient and the guest. In a modified arrangement, the diversity of programs and the required data may be stored in the ROM 24 or a CD-ROM (not shown) and loaded to be executed by the computer. Various pieces of information discussed later are also accumulated in the storage device 34. The storage device 34 accordingly functions as the data storage means as well as the first memory means and the second memory means.

The serial input-output interface (SIO) 32 is a controller that is in charge of input and output of data from and to the outside. The server SV1 is connected to the external network NW via the SIO 32. In general, servers are directly connected to the network NW using an exclusive line. The SIO 32 is accordingly actualized as a network card corresponding to a protocol used in the network NW. The first terminal 80, the second terminal 90, and the third terminal 70 are all connected to the network NW. All the terminals and servers have addresses that are allocated to identify themselves on the network (IP addresses when the TCP/IP protocol is adopted). The respective terminals 70, 80, and 90 gain access to the server SV1 using these addresses to enable processing and transmission of data to and from the server SV1. Permission to access the server SV1 is given to all the terminals, but passwords are assigned to specific files and data provided in the server SV1. Only the user who satisfies preset conditions can gain access to the specific files and data. The procedure of setting the passwords will be discussed later.

The server SV1 reveals general information like the outline of service to even unauthorized accesses without the password. A diversity of services like registry service discussed later are executed only in response to authorized accesses from legitimate users verified by the password. More specifically, the server SV1 carries out registry service in response to instructions from the first terminal 80, gift item specification service in response to instructions from the second terminal 90, and shipment management service in response to instructions from the third terminal 70. The details of the registry service, the gift item specification service, and the shipment management service will be discussed later.

The serial input-output interface (SIO) 32 inputs characters and other data in the form of code data, although the input is not restricted to this form. One applicable configuration uses an interface for inputting voice information and information on the shape of characters. The interface converts input information into digital information readable by the CPU 22 and reconverts the digital information into series of characters by voice recognition or character recognition.

The keyboard interface 25 (KI) is in charge of input and output of signals from and to a keyboard 38. The display controller (DC) 30 controls output of signals to a liquid crystal display 20 functioning as a color display device. The printer interface 40 (PI) controls output of data to a printer 42.

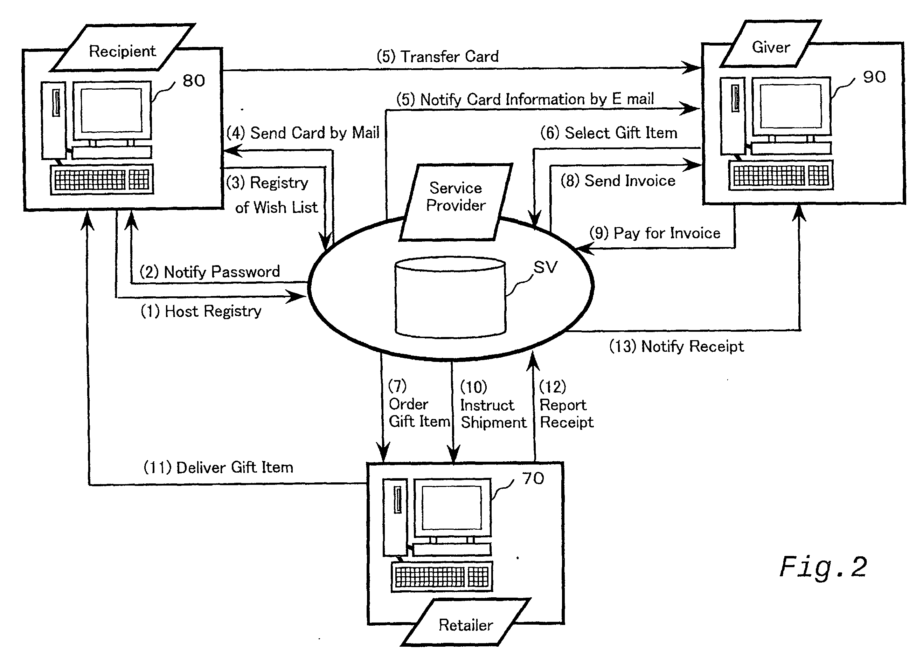

The following describes the contents of the gift service system executed in the above hardware configuration. Fig. 2 is a block diagram illustrating the contents of the gift service system. The recipient gains access from the own computer, the first terminal 80 in this embodiment, to the server SV1 owned by the service provider for host registry (1). On completion of the host registry, the service provider opens a site for the recipient with the host registry (hereinafter referred to as the registrant or the host) in the server SV1 and issues a host ID and a host password to authorize access to this site by the host. The service provider then notifies the registrant of the host ID and the host password (2). One technique of notification displays completion of the host registry on the display 80b of the first terminal 80 based on transmission from the server SV1. Another technique notifies the registrant of completion of the host registry by mail or by electronic mail.

The registrant who is notified of the host password again gains access from the first terminal 80 to the server SV1 and inputs the host ID and the host password. The input allows the registrant to visit the host site and enter a diversity of registry services.

A catalog discussed later is provided in the host site in a specific format that allows the registrant to check the specification of the respective items. The registrant selects desired items in the catalog and registers a list of the selected items on the host site (3).

On completion of the registry of the selected items, a message card is sent to the registrant by mail (4). A guest ID and a guest password issued by the service provider are printed in advance on the message card. The registrant transfers the message card with preset sentences of greeting to the giver (5). The service provider may act for the registrant on the request of the registrant to contact the giver and notify the giver of information on the guest ID and the guest password by electronic mail, FAX, or the like.

The giver who has received the message card and understood the proceeding gains access from the own computer, the second terminal 90 in this embodiment, to the server SV1 and inputs the guest ID and the guest password. The input allows the giver to see the list of items selected by the registrant (hereinafter referred to as the wish list) on the host site. The giver selects one or a plurality of items desired for the gift to the recipient among the items in the wish list and registers the selected gift item on the host site (6).

On completion of the registry of the selected gift item, the service provider makes an order for the selected gift item to the retailer (7) and sends an invoice of the gift item to the giver (8). The giver pays money on the invoice to the service provider by bank transfer, by online settlement, or by any other appropriate method (9). The service provider confirms the payment and instructs the retailer to deliver the gift item (10). When the recipient specifies the date and time for receiving the gift item, the service provider instructs the shipment based on the specified date and time.

The retailer delivers the gift item to the recipient in response to the instruction (11) and reports the service provider that the recipient has received the gift item (12). The service provider has received the report and notifies the giver of the fact that the recipient has received the gift item by E mail, by FAX, or by another appropriate method (13).

The above description regards the contents of the gift service system. The following describes the diverse services, that is, the registry service, the gift item specification service, and the shipment management service, executed by the server SV1 to attain the gift service system. The registry service, the gift item specification service, and the shipment management service respectively correspond to the steps (1) to (5), the steps (6) to (8), and the steps (9) to (13) shown in Fig. 2 and are executed by the computer in the server SV1. The registry service, the gift item specification service, and the shipment management service are thus carried out in this order.

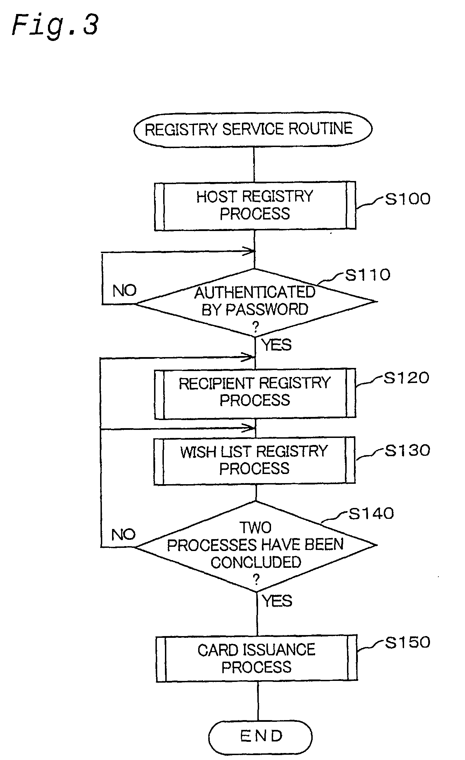

The details of the registry service are shown as a registry service routine in the flowchart of Fig. 3. The registry service routine is activated when a person who requires registry communicates with the server SV1 and selects 'Host Registry'. Namely the registry service routine is activated when the server SV1 receives a signal that requires the host registry via the network NW. In the following description, it is assumed that the server SV1 receives the signal from the first terminal 80.

When the routine of Fig. 3 is activated, the program first carries out a host registry process (step S100). The host registry process causes an individual who desires to enter the gift service system to be registered as a member of the gift service system according to the following procedure. The program first transmits data of a registry application format to the first terminal 80 via the public telephone line PTL. The program specifies a host ID and a host password on receipt of individual information on the registrant or the host, such as the name of the host, and transmits the host ID and the host password to the first terminal 80. The host ID and the host password are stored in the server SV1 in a specific form linked with the received individual information.

One modified procedure may specify not only the host ID and the host password but a guest ID and a guest password mapped to the host ID and the host password and transmit the guest ID and the guest password together with the host ID and the host password to the first terminal 80.

On completion of the host registry process, the program identifies the input of the host ID and the host password (step S110). In response to the identified input of the host ID and the host password, the program carries out a recipient registry process and a wish list registry process ( steps S120 and S130). One practical procedure may cut off the communication of the first terminal 80 with the server SV1 after the host registry process, send the host ID and the host password by E mail or another appropriate means, and again establish the communication of the first terminal 80 with the server SV1. In the procedure of this embodiment, the program exits from the registry service routine when it is determined at step S110 that three consecutive inputs for the combination of the host ID and the host password are incorrect. This arrangement effectively prevents the catalog for gift or any other pieces of information from being illegally browsed by any third person without the membership, for example, any person in the same business line.

The recipient registry process (step S120) causes the recipient to register information on details of the gift. The program first transmits data of a recipient registry format to the first terminal 80 via the public telephone line PTL. The registry format for the recipient registry is then displayed on the first terminal 80. The registry format includes the name, the address, and other ID data of the recipient, the desired dates for delivery of items, and the number of expected guests. In response to input of the data of the registry format with the entry, the program creates and stores a recipient list based on the input data.

Since it is highly probable that the host is the recipient, in the procedure of this embodiment, the registry format transmitted to the first terminal 80 already has some entries like the name and the address of the recipient registered in the host registry process (step S100). This arrangement avoids the duplicated input of the name and the address and thus relieves the loading of the host for the registry. The recipient registry format allows input of plural recipients.

The wish list registry process causes the recipient to register desired items for the gift according to the following procedure. The server SV1 first transmits data on a catalog (discussed later) to the first terminal 80 via the network NW. The catalog including images and specifications of respective items is then displayed on the display 80b of the first terminal 80 in a specific form that allows selection of each item. In response to selection of one or plural items in the catalog, the server SV1 creates and stores a wish list including the selected items . Concrete applications of the wish list will be discussed later.

In the registry service routine of Fig. 3, the recipient registry process and the wish list registry process may be carried out in the reverse order.

The program subsequently determines whether or not both the recipient registry process and the wish list registry process have been concluded (step S140). When it is determined that both of the processes have not yet been concluded, the program returns to the non-concluded process and repeats the above series of processing. When it is determined that both the processes have been concluded, on the other hand, the program proceeds to a card issuance process (step S150).

The card issuance process creates the message card mentioned above. The program specifies a guest ID and a guest password and prints the specified guest ID and guest password on the message card.

When there are a plurality of guests or givers, the procedure of this embodiment allocates different guest IDs and guest passwords to the respective guests. One modified procedure may specify the guest IDs and the guest passwords in such a manner that differentiates only either the guest ID or the guest password for the respective guests.

The procedure of the embodiment stores the guest password linked with the host password. The linkage of the two passwords allows the access by the guest to the data stored in the site for the host (for example, the wish list).

The program exits from the registry service routine on completion of the card issuance process. One modified application of this routine has a step of registering information on the mail address of the guest. The specified guest ID and guest password may be transmitted to the second terminal 90 by electronic mail, based on such registry.

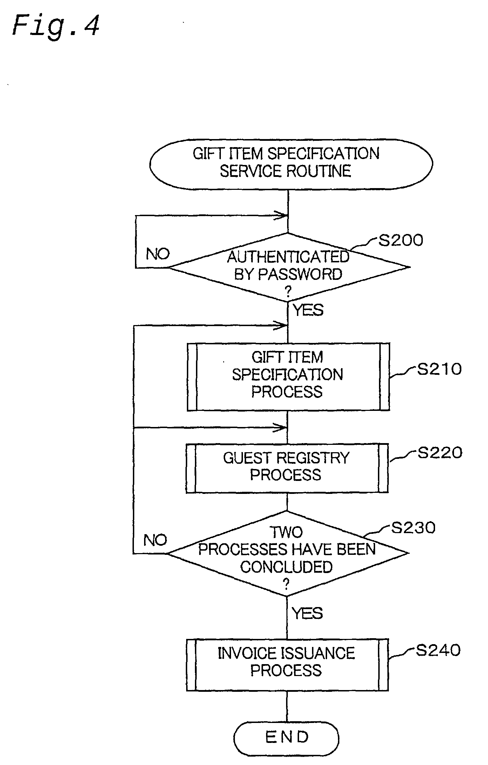

The details of the gift item specification service are shown as a gift item specification service routine in the flowchart of Fig. 4. After completion of the registry service discussed above, the server SV1 stands by for access from the second terminal 90 to a guest site. The gift item specification service routine is activated in response to the access to the guest site.

When the routine of Fig. 4 is activated, the program first identifies the input of the guest ID and the guest password (step S200) and carries out a gift item specification process (step S210) in response to the identified input of the guest ID and the guest password. In the procedure of this embodiment, the program exits from the gift item specification service routine when it is determined at step S200 that three consecutive inputs for the combination of the guest ID and the guest password are incorrect. This arrangement effectively prevents unauthorized accesses for fun or harassment. There may be people who repeat an application process (discussed later) without any intention for payment and interfer with authorized accesses. This arrangement prevents such tricks.

The gift item specification process causes the guest to select one or a plurality of desired items for the gift to the recipient among the items in the wish list and register the selected gift items according to the following procedure. The server SV1 first transmits data of the wish list to the second terminal 90 via the network NW. The wish list including images and specifications of the items selected by the recipient is displayed on the display 90b of the second terminal 90 in a specific manner that allows selection of each item. In response to selection of one or plural items in the wish list, the server SV1 specifies and stores the selected gift items.

On completion of the gift item specification process, the program carries out a guest registry process (step S220). The guest registry process causes the guest to register information on the giver of the gift according to the following procedure. The program transmits data of a guest registry format to the second terminal 90 via the public telephone line PTL. The registry format with vacancy in the name, the address, and other ID data of the guest is displayed on the display 90b of the second terminal 90. In response to entry of the name, the address, and other ID data of the guest, the program creates a guest list based on the input data.

The guest list includes the individual information, such as the name of the guest, linked with the guest ID, the guest password, and the information on the selected gift items and is stored in the server SW.

Prior to the creation and storage of the guest list, one applicable procedure may confirm whether 'the person who accesses the site' is coincident with the 'person entered in the guest registry format' by phone, by FAX, or by another communication means. This prevents deceptive actions for the gift.

In the gift item specification service routine of Fig. 4, the gift item specification process and the guest registry process may be carried out in the reverse order.

The program subsequently determines whether or not both the gift item specification process and the guest registry process have been concluded (step S230). When it is determined that both of the processes have not yet been concluded, the program returns to the non-concluded process and repeats the above series of processing. When it is determined that both the processes have been concluded, on the other hand, the program proceeds to an invoice issuance process (step S240).

The invoice issuance process issues an invoice, which is sent to each guest. The program calculates a total amount to be billed to each guest based on the selection of gift items and prints the result of the calculation together with the name of the guest, the guest password, the date of selection of the gift items, the categories of the selected gift items, and other required pieces of information on the invoice. The program creates and stores an invoice list that specifies the details of liabilities with regard to the respective gift items (for example, the due date of payment by each guest and the payment record) and includes the record of receipt of each gift item by the recipient.

On completion of the invoice issuance process, the program exits from the gift item specification service routine. This routine may have an additional step of transmitting the invoice file created at step S240 to the second terminal 90 by electronic mail.

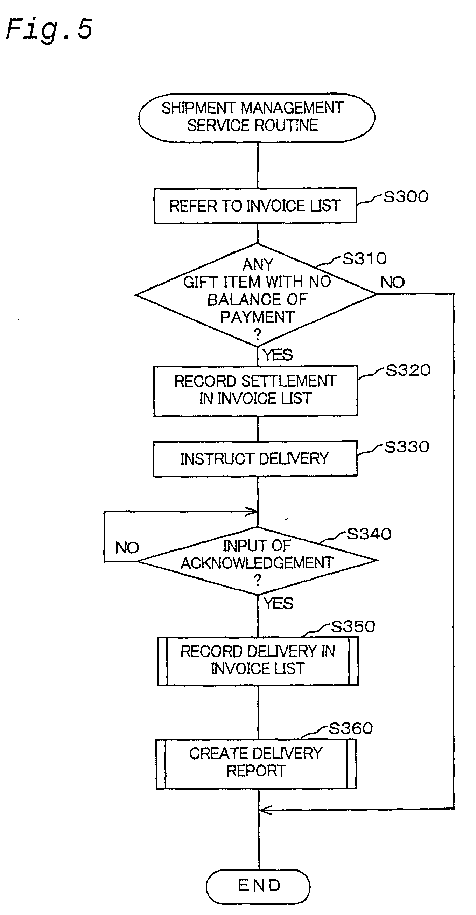

The details of the shipment management service are shown as a shipment management service routine in the flowchart of Fig. 5. After conclusion of the gift item specification service discussed above, the server SV1 continuously monitors the invoice list stored therein. The shipment management service routine is activated in response to a new entry of payment record into the invoice list.

When the routine of Fig. 5 is activated, the program first refers to the invoice list (step S300) and determines whether or not there is any gift item with no balance of payment (that is, with settled accounts) (step S310). When there is no gift item with no balance of payment, the program immediately exits from this routine without further processing. When there is any gift item with no balance of payment, on the other hand, the program records the settlement for the gift item in the invoice list (step S320) and instructs delivery of the gift item (step S330).

The procedure of step S330 refers to the data on the desired date for delivery of the item stored in the recipient registry service (step S120 in Fig. 3) and instructs delivery of the gift item on the desired date if the desired date has not yet elapsed.

The delivery instruction at step S330 is given by transmitting a file with the delivery instruction written therein to the third terminal 70 via the network NW. On conclusion of the transmission, the program detects input of an acknowledgement from the third terminal 70 (that is, a notification showing that the recipient has received the gift item) (step S340). In response to input of the acknowledgement, the program records the fact of delivery of the gift item in the invoice list (step S350) and creates a delivery report addressed to the guest (step S360). The program then exits from this routine. This routine may include an additional step of transmitting a file of the delivery report created at step S360 to the second terminal 90 by electronic mail.

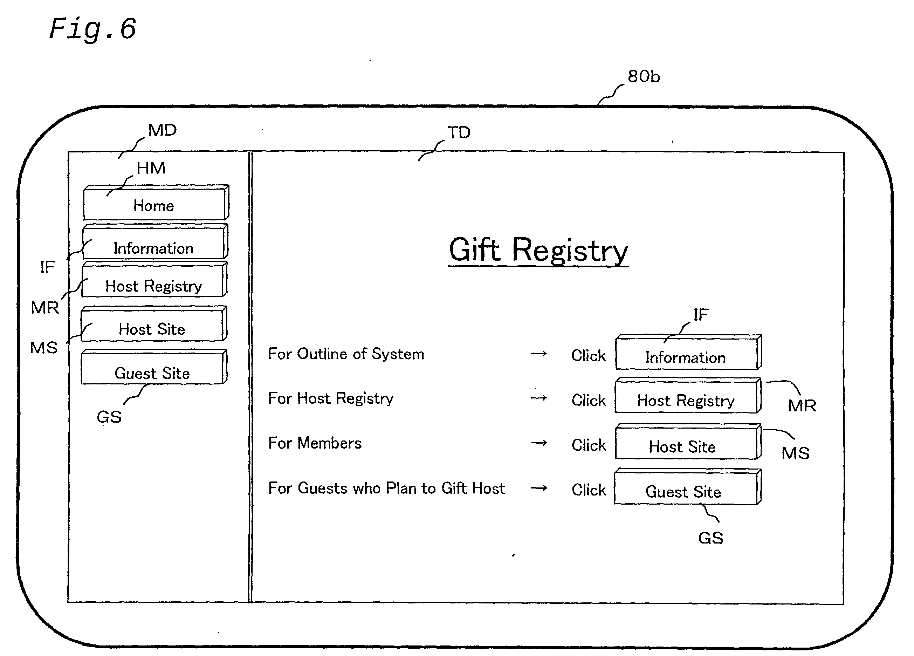

The above description regards the details of the registry service, the gift item specification service, and the shipment management service executed in the gift service system. A concrete example of actually providing the gift service system is discussed with referring to Figs. 6 through 17, based on the registry service and the gift item specification service. Fig. 6 shows an initial window displayed first on the display 80b when the recipient gains access from the first terminal 80 to the server SV1.

As shown in Fig. 6, a trade name of the gift service system 'Gift Registry' and four tabs IF 'Information', MR 'Host Registry', MS 'Host Site', and GS 'Guest Site' are displayed on a text window TD on the right side of the display 80b. Five tabs including a 'Home' tab HM in addition to the above four tabs are displayed on an index window MD on the left side of the display 80b. The recipient selects and clicks any of these tabs with a pointing device, such as the mouse 80e, and goes to a page relating to the selected tab.

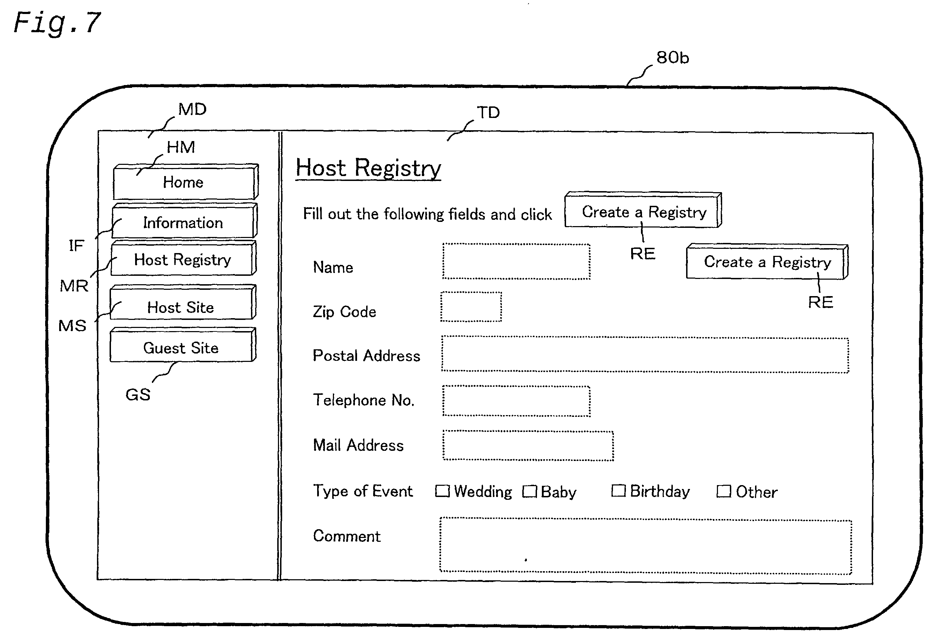

To enter the gift registry service, the recipient clicks the 'Host Registry' tab MR on the initial window with the mouse 80e. A page of host registry shown in Fig. 7 then appears on the display 80b.

As shown in Fig. 7, field labels for details, that is, the name, the zip code, the postal address, the telephone number, the mail address, the event type, and the comment, boxes corresponding to the respective fields, and 'Create a Registry' tab RE are displayed in the text window TD.

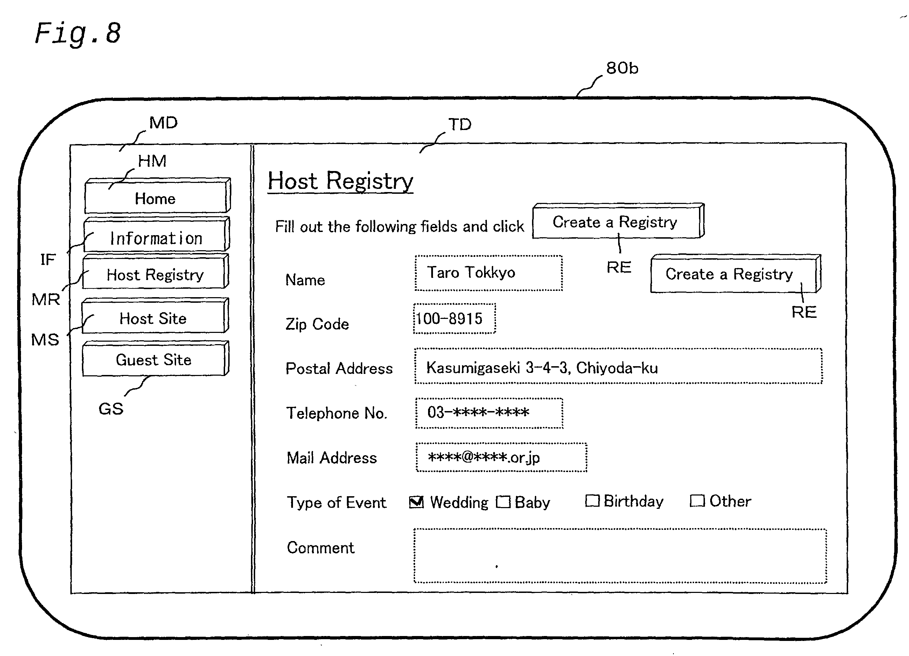

In order to create a registry for the gift registry service, the recipient fills out the fields of the individual information with the keyboard 80d and the mouse 80e. Here it is assumed that the recipient selects 'Wedding' as the type of event and fills out the details of the individual information as shown in Fig. 8.

The entry of the comment is not required but is voluntary. When 'Other' is ticked as the type of event, options other than Wedding, Baby, and Birthday or a fill-in box may be displayed.

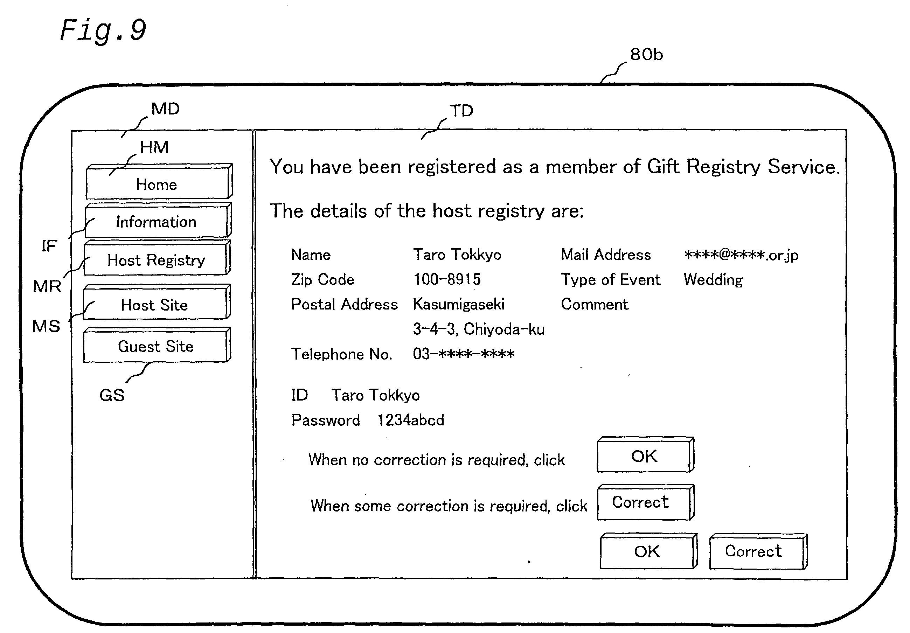

After filling out the details of the individual information, the recipient clicks the 'Create a Registry' tab RE with the mouse 80e. The filled-in fields of the individual information are then transmitted to the server SV1 of the service provider via the public telephone line PTL. The server SV1 receives the fields of the individual information, issues a host ID and a host password, and transmits the host ID and the host password to the first terminal 80. The text window TD on the display 80b then changes to a registry confirmation window that shows the details of the host registry for confirmation and notifies the recipient of the host ID and the host password. Fig. 9 shows an example of the registry confirmation window. Hereafter the recipient is treated as the host of the 'Gift Registry' service and can access the host site and the guest site with the host ID 'Taro Tokkyo' and the host password '1234abcd'.

One practical procedure may confirm whether 'the person who accesses the site' is coincident with the 'person entered in the host registry format' by phone, by FAX, or by another communication means and display the registry confirmation window only in the case of coincidence. This effectively prevents unauthorized or illegal registration.

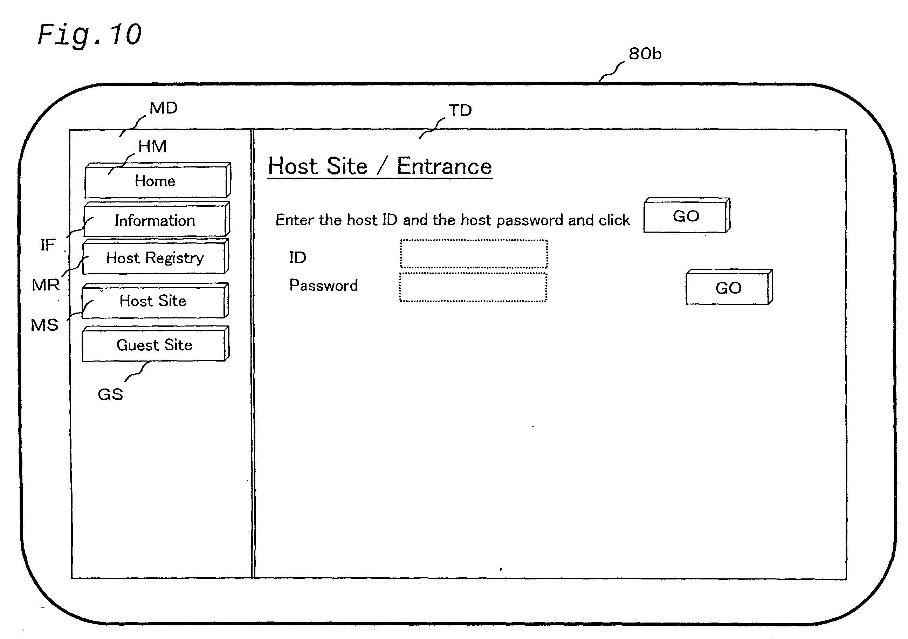

After completion of the host registry, a click of the 'Host Site' tab MR on the index window MD with the mouse 80e gives display of a window for entering the host site shown in Fig. 10 on the text window TD. Verified identity with the host ID and the host password allows the host to access the information in the host site.

One practical application displays a list of categories of gift in response to input of a predetermined ID (for example, 'sample') in an ID box on the window for entering the host site shown in Fig. 10.

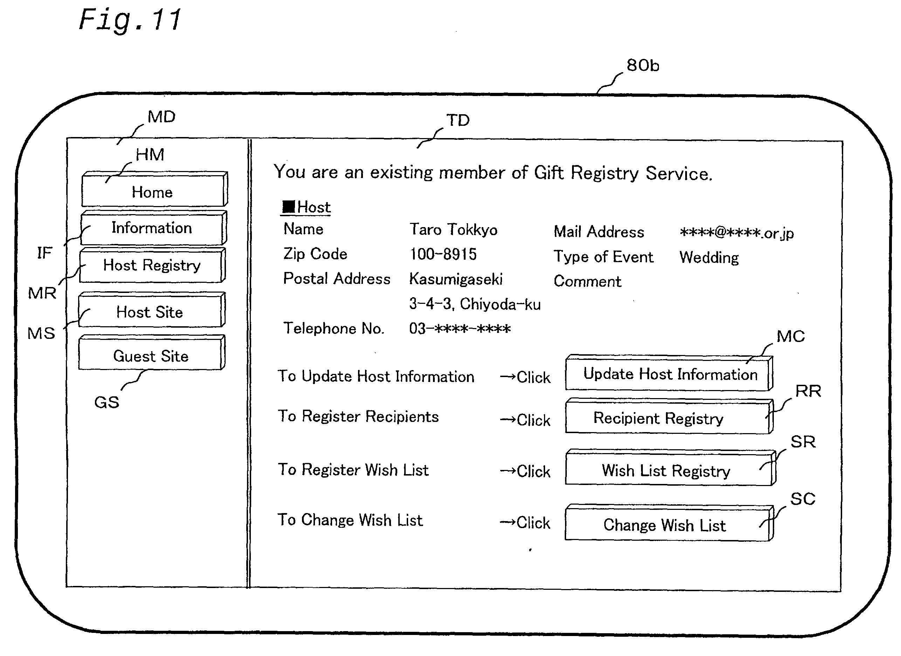

When the host fills out the host ID 'Taro Tokkyo' and the host password '1234abcd' and clicks the 'GO' tab, an information window shown in Fig. 11 is displayed. The information window includes a predetermined sentence showing that the host is the existing member and four tabs MC 'Update Host Information', RR 'Recipient Registry', SR 'Wish List Registry', and SC 'Change Wish List'.

The 'Update Host Information' tab MC is clicked to update the details of the individual information on the registrant or host who is the existing member. For example, in the case of moving, the host clicks this tab MC and changes the postal address and other related fields.

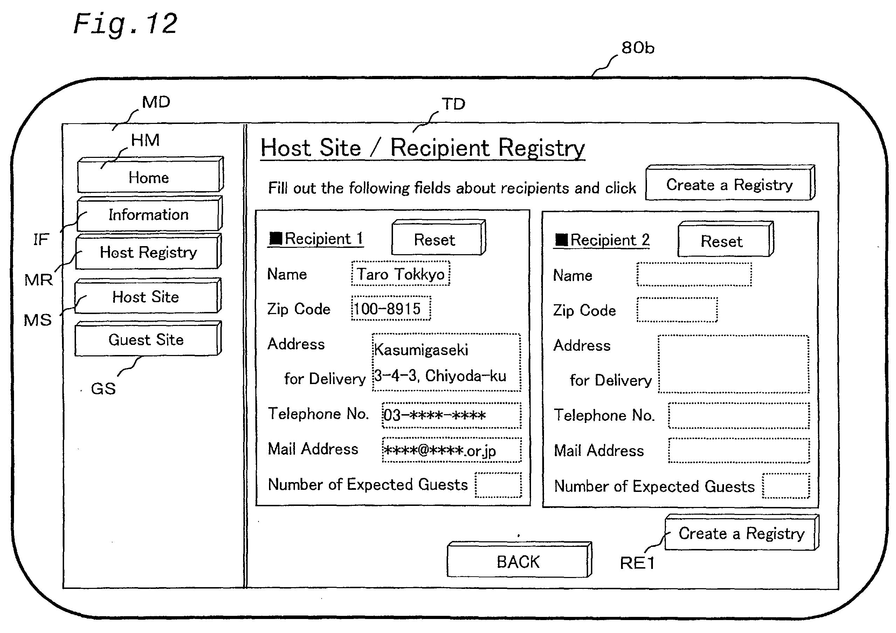

For registry of recipients of items, the host clicks the 'Recipient Registry' tab RR on the information window shown in Fig. 11. This gives display of a page for recipient registry shown in Fig. 12 on the display 80b.

As shown in Fig. 12, an input box for filling out information on two recipients 'Recipient 1' and 'Recipient 2' and a 'Create a Registry' tab RE1 are displayed on the text window TD. In this embodiment, the input box allows entry of information on two recipients since there may be a plurality of recipients. In the case of a wedding event, this arrangement enables any guests of the bride and the groom to select items for wedding gift based on the information of the recipients.

The host is required to fill out fields of information on each recipient, for example, the name, the zip code, the address for delivery, the telephone number, the mail address, and the number of expected guests. The 'Number of Expected Guests' field shows the number of expected guests for each recipient, that is, the number of individuals who are expected to gift each recipient.

At the moment when the page for recipient registry shown in Fig. 12 appears on the display 80b, the name, the zip code, the postal address, the telephone number, and the mail address of the host have already been entered in the input box of the 'Recipient 1'. In the case where the host is identical with the recipient, the host is not required to reenter the details, for example, the name and the postal address, which have been filled out for host registry, through the operation of the keyboard 80d. The host is just required to check the registered fields, that is, the name, the zip code, the address for delivery, the telephone number, and the mail address and to enter the number of expected guest.

When there is any change in details of the registry for the 'Recipient 1' and the 'Recipient 2', the registered fields are overwritten to update the registry.

It is here assumed that the details of one host 'Taro Tokkyo' and the details of another host 'Hanako Tokkyo' are respectively entered in the input boxes 'Recipient 1' and 'Recipient 2' on the window of Fig. 12. A click of the 'Create a Registry' tab RE1 after the entry of the details causes the two individuals 'Taro Tokkyo' and 'Hanako Tokkyo' to be registered as the recipients.

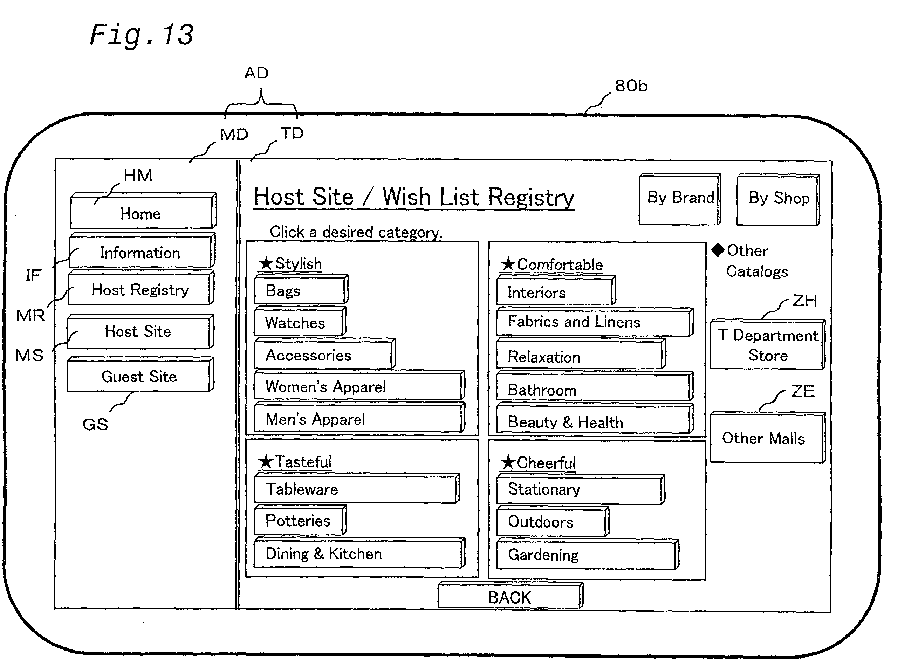

The following describes selection and registry of a wish list for gift items. A click of the 'Wish List Registry' tab SR on the information window shown in Fig. 11 gives display of an index page for wish list registry shown in Fig. 13 on the display 80b.

In the index page, a diversity of items are classified into four large categories 'Stylish', 'Tasteful', 'Comfortable', and 'Cheerful', and each category has several sub-categories as shown in Fig. 13 (for example, bags, watches, and accessories are included in the 'Stylish' category). The recipient clicks a category name tab in the displayed window with the mouse 80e to open a window for displaying items registered under the clicked category name.

A click of a 'By Shop' tab in the index page shown in Fig. 13 allows retrieval of items available from respective shops including department stores and DIY shops. In the case where the shop name of a specific item is unknown but the brand name of the specific item is known, a click of a 'By Brand' tab allows retrieval of items registered under each brand name. A 'T Department Store' tab ZH and a 'Other Malls' tab ZE shown in Fig. 13 are used in the second embodiment and are not related to this embodiment. These tabs are thus omitted from explanation of this embodiment and will be discussed later.

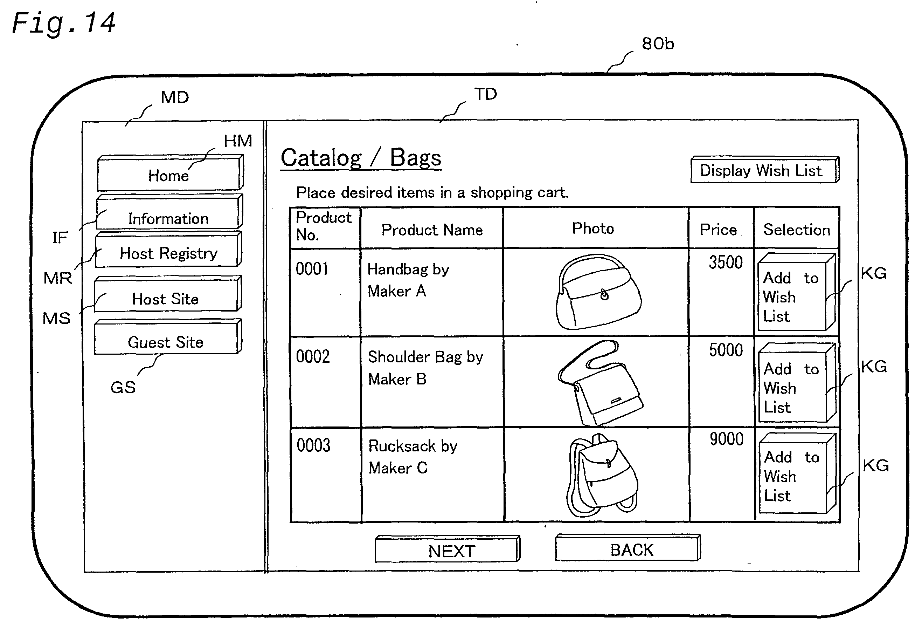

Here it is assumed that a category name tab 'Bags' included in the category 'Stylish' is clicked in the index page shown in Fig. 13. The text window TD on the display 80b then shows a catalog of available bags shown in Fig. 14.

The catalog includes information on the product number, the product name, the photographic image, and the price of each item. A click of a 'NEXT' tab in the display window of Fig. 14 gives display of information on other available bags included in the catalog. A click of the photographic image of a selected item gives display of detailed information on the selected item, that is, the specification of the selected item including the product number, the size, the material, and the color, together with an enlarged photographic image of the selected item.

A selection tab KG 'Add to Wish List' is provided for each item on the right side of the catalog. The recipient retrieves the catalog to find a desired item for gift and clicks the selection tab KG of the desired item. The click of the section tab KG gives display of a wish list of selected items in the text window TD. The wish list of selected items is displayed in response to a click of 'Display Wish List' tab on the upper right corner of the catalog window shown in Fig. 14.

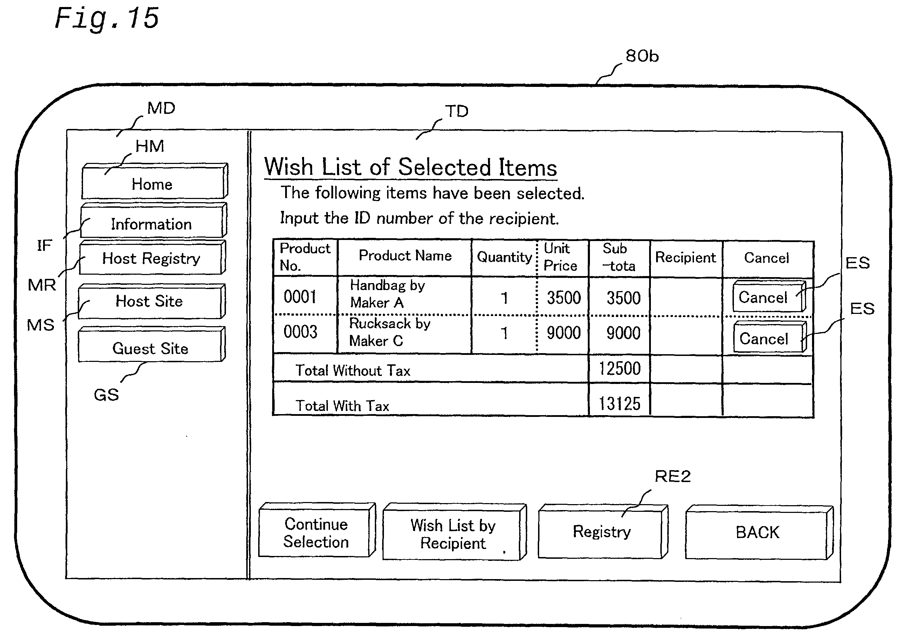

In one example, on the catalog window of Fig. 14, the 'Recipient 1' Taro Tokkyo selects a 'Rucksack by Maker C' and the 'Recipient 2' Hanako Tokkyo selects a 'Handbag by Maker A'. Fig. 15 shows a window displaying a wish list of selected items on the display 80b. The display in the text window TD includes the product name, the quantity, the unit price, and the sub total of each selected item, the total of all selected items without tax, and the total with tax as shown in Fig. 15. In the case of selection of any wrong item, a click of a 'Cancel' tab provided for each item cancels the selection of the item.

In the case of selection of all right items, the recipient inputs an ID number allocated to the recipient of each item in the wish list window of Fig. 15. In the above example, the ID number '2' representing the 'Recipient 2' is input in the box of the 'Handbag by Maker A', and the ID number '1' representing the 'Recipient 1' is input in the box of the 'Rucksack by Maker C'. This allows registry of a wish list of desired items for the gift by the recipient. One modified procedure issues an individual password for each recipient and asks the recipient to input the password for gaining access to the catalog window. In response to verified identity with the password, the recipient who has registered the wish list of selected items is automatically shown in the wish list window of Fig. 15.

In the wish list window of Fig. 15, a click of a 'Wish List by Recipient' tab gives display of a wish list of selected items by each recipient. The display clearly shows which recipient selects what items. This is especially advantageous when each recipient selects a large number of items.

When further selection of items is desired, the recipient clicks a 'Continue Selection' tab to return the display to the catalog window of Fig. 14. When selection of all the desired items is concluded, the recipient clicks 'Registry' tab RE2 in the wish list window of Fig. 15 to make the selected items registered for each recipient. A wish list of gift items is created, based on the registry.

On completion of the 'recipient registry' and the 'wish list registry' by each recipient, message cards are sent to the recipient by mail. Each message card includes the address of the home page of the 'Gift Registry' service, a guest ID, and a guest password. The recipient transfers the message card to each guest to enable access to the guest site by the guest.

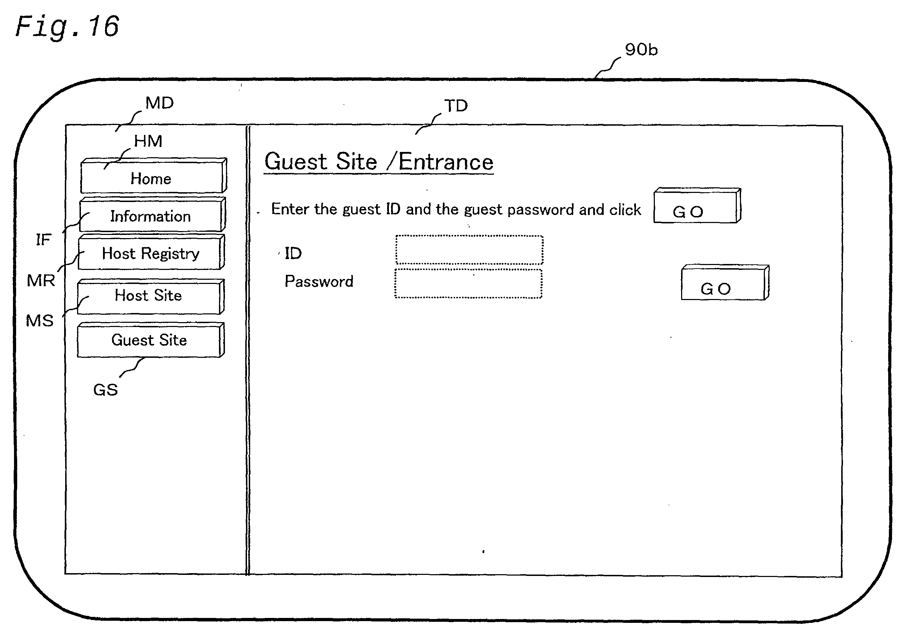

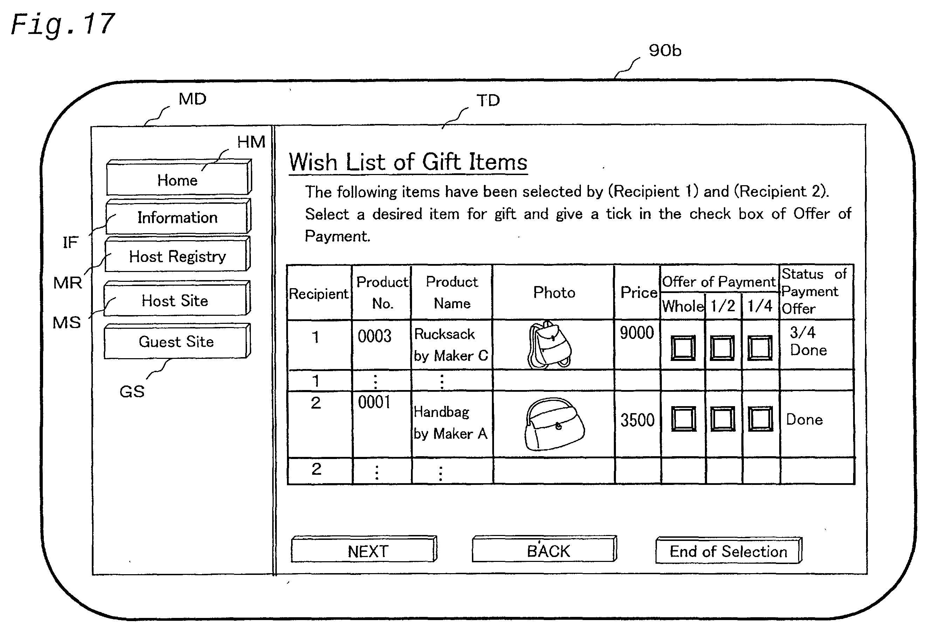

When the guest gains access from the second terminal 90 to the server SV1, the initial window shown in Fig. 6 appears on the display 90b. The guest clicks the 'Guest Site' tab GS in the initial window with the mouse 90e to open a window for entering the guest site in the text window TD as shown in Fig. 16. Only the entry of the right guest ID and guest password allows access to information in the guest site. The guest enters the assigned guest ID and guest password in the respective fields and clicks a 'GO' tab to open a window displaying a wish list of gift items shown in Fig. 17.

The wish list of gift items includes information on the respective items selected by the recipients in the catalog. In the example of Fig. 17, the display includes information on the product number, the product name, the photographic image, and the price of the items including ' Rucksack by Maker C' selected by the 'Recipient 1' Taro Tokkyo and the items including 'Handbag by Maker A' selected by the 'Recipient 2' Hanako Tokkyo.

The display of the items selected by the Recipient 1 is followed by the display of the items selected by the Recipient 2 in the wish list of gift items shown in Fig. 17. The classified display of the selected items by each recipient enables the guest to readily select a desired item for the gift to a specified recipient.

In the case where the recipients have selected a large number of items, a click of a 'NEXT' tab in the wish list window of Fig. 17 gives display of information on other selected items. A click of the photographic image of each selected item gives display of detailed information on the selected item, that is, the specification of the selected item including the product number, the size, the material, and the color, together with an enlarged photographic image of the selected item.

Boxes 'Offer of Payment' and 'Status of Payment Offer' are provided for each selected item on the right side of the wish list of gift items. As shown in Fig. 17, the 'Offer of Payment' box is divided into three areas: 'Whole' representing payment for the whole price of the corresponding item, '1/2' representing payment for half the price of the corresponding item, and '1/4' representing payment for quarter of the price of the corresponding item. There are check boxes corresponding to these three areas.

The guest first selects a desired item for the gift to the recipient among the plurality of items included in the wish list of gift items. The guest then specifies the rate of payment to the price of the selected item and ticks one of the check boxes assigned to 'Whole' , '1/2', and '1/4' with the mouse 90e. The clicked item is then specified as the gift from the guest to the recipient. The guest may select a plurality of desired items in the wish list of gift items.

The 'Status of Payment Offer' box on the right end of the wish list shows the current status of payment offer for each item. In the example of Fig. 17, the status of payment offer for the item 'Handbag by Maker A' is 'Done'. This means that another or other guests have already offered the payment for the whole price of the item. The status of payment offer for the item 'Rucksack by Maker C' is '3/4 Done'. This means that another or other guest have already offered the payment for three quarters of the price of the item. The display of the current status of payment offer for each item effectively prevents overlapped gift of an identical item to the recipient.

In this embodiment, as shown in Fig. 17, the 'Status of Payment Offer' box gives only the total rate of payment offered by another or other guests. Information on the other guests like their names is omitted from the display to protect the privacy of the respective guests.

With regard to the item whose 'Status of Payment Offer' is 'Done', no further tick is allowed in any check boxes of the 'Offer of Payment' box. Namely the item 'Handbag by Maker A' is not the possible option of payment offer in the wish list of gift items shown in Fig. 17. With regard to the item for which the partial payment has been offered as in the case of '3/4 Done', no tick is allowed in the check boxes that conflict with the current status of payment offer. For example, in the wish list of gift items shown in Fig. 17, a tick of the check box 'Whole' or '1/2' allocated to the item 'Rucksack by Maker C' causes the total offer of payment for the item 'Rucksack by Maker C' to exceed the price of the product 'Rucksack by Maker C'. In order to prevent such troubles, only the offer of payment for the residual quarter of the price is allowed for the item 'Rucksack by Maker C', while any offer of payment is prohibited for the whole price or half the price of the product.

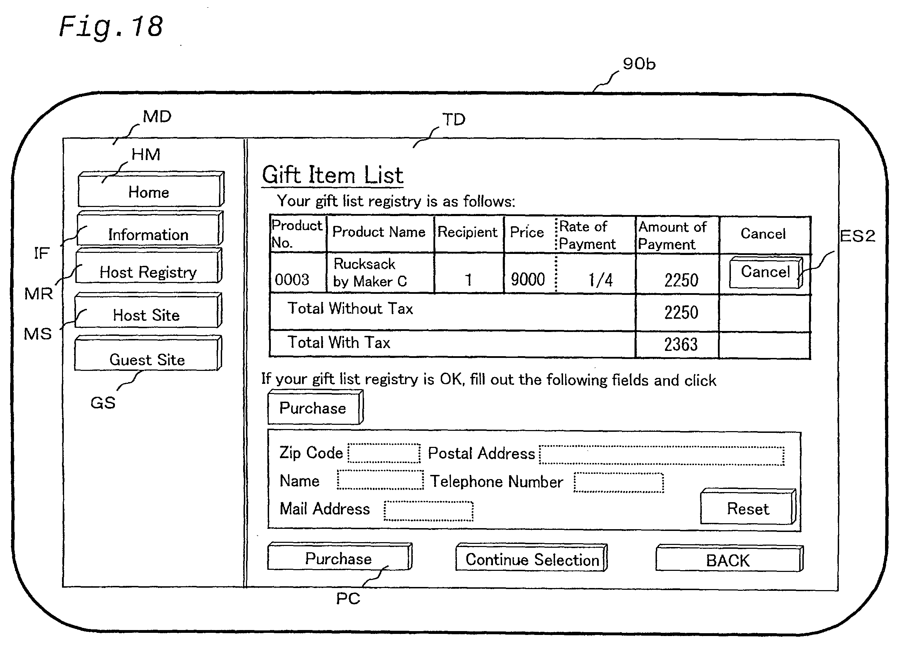

When the guest ticks a check box in the 'Offer of Payment' box of the selected item for the gift and clicks an 'End of Selection' tab, a gift item list is displayed in the text window TD on the display 90b. Fig. 18 shows a window displaying a gift item list, which is created when the item 'Rucksack by Maker C' is selected for the gift item and the payment is offered for one quarter of the price in the wish list of gift items shown in Fig. 17.

As shown in Fig. 18, the display in the text window TD includes the product name, the product number, the recipient, and the price of each item selected by the guest, the rate of payment to the price of each item and the resulting amount of payment, the total of payment without tax, and the total of payment with tax.

In the case of wrong selection of any item or rate of payment, a 'Cancel' tab ES2 allocated to each selected item is clicked to cancel selection of the item. In order to continue selection of items, a 'Continue Selection' tab is clicked to return the display to the wish list of gift items shown in Fig. 17.

In the case of right selection of all the items, the guest is asked to input information on the guest, that is, the name, the postal address, the zip code, the telephone number, and the mail address of the guest, in the gift item list window of Fig. 18 through operations of the keyboard 90d and click a 'Purchase' tab PC with the mouse 90e. This creates the registry showing that the guest will pay for one quarter of the price of the item 'Rucksack by Maker C' as the gift to the 'Recipient 1' Taro Tokkyo.

The service provider of the 'Gift Registry' service sends an invoice to the guest, based on the registered information. The service provider confirms actual payment for the price of a selected item by each guest and sends the selected item to each recipient as the gift from the guest. In the case where the price of one item is dividedly paid by a plurality of guests as discussed above, the item is sent to the recipient as the share gift by the plurality of guests, on completion of the payment for the whole price by the respective guests.

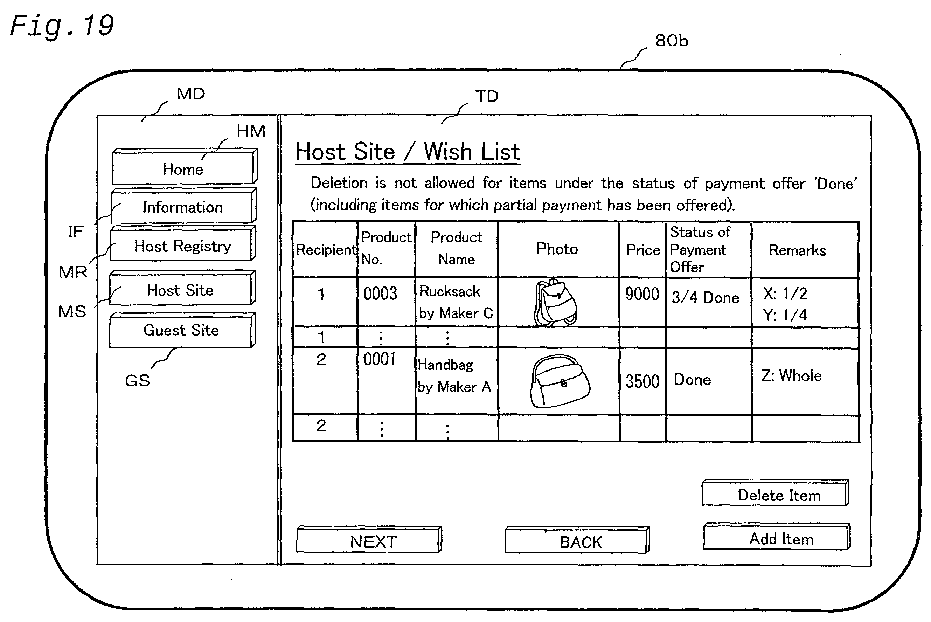

In the 'Gift Registry' service, the wish list of gift items selected and registered by the recipient may be changed according to the requirements. In a concrete example, a click of the 'Change Wish List' tab SC in the information window of Fig. 11 gives a window for changing the wish list on the display 80b as shown in Fig. 19.

As shown in Fig. 19, a wish list of items selected among the catalog by the recipient is displayed in the wish list change window. Like the wish list of gift items discussed above, the wish list of selected items includes information on the product number, the product name, the photographic image, and the price of each item selected by the recipient.

The wish list of selected items also has the 'Status of Payment Offer' box, which is present in the wish list of gift items, and a 'Remarks' box, which is not present in the wish list of gift items. The 'Status of Payment Offer' box shows the rate of payment offered by one or plural guests to the price of each item. The 'Remarks' box shows information on the names of the guests who have offered payment for each item and the rate of payment by the respective guests. In the example of Fig. 19, the guest Z has offered payment for the whole price of the item 'Handbag by Maker A' as the gift to the 'Recipient 2' Hanako Tokkyo, whereas the guests X and Y have respectively offered payment for half the price and a quarter of the price of the item 'Rucksack by Maker C' as the gift to the 'Recipient 1' Taro Tokkyo.

The recipient refers to the wish list of selected items and checks information on the names of the guests and their rates of payment. The guests do not have the host ID and the host password to enter the host site and thus can not access the wish list of selected items in the host site.

The recipient deletes a specified item from the wish list in the following manner. First the recipient clicks the product name of the specified item as the target of deletion in the wish list of selected items displayed in the window. The respective fields, that is, the recipient, the product number, the product name, the photographic image, the price, the status of payment offer, and the remarks of the clicked item are in reverse display. The recipient clicks a 'Delete Item' tab located on the lower right corner of the window under the condition of reverse display to delete the specified item. In response to deletion of the specified item, the wish list of gift items is updated to exclude the deleted item.

In this embodiment, all the items that have been selected for the gift items by any guests are excluded from the target of deletion. In the example of Fig. 19, the items 'Rucksack by Maker C' and 'Handbag by Maker A' have already been selected for the gift items by the guests X, Y, and Z. The click of the product name 'Rucksack by Maker C' or 'Handbag by Maker A' accordingly does not make the reverse display. Namely these items are out of the selectable range of deletion. One preferable application may display a comment like 'This item has already been selected for the gift item by a guest and is thus out of the selectable range of deletion' on the display 80b, in response to the click of the product name 'Rucksack by Maker C' or 'Handbag by Maker A'.

The recipient clicks 'Add Item' tab shown in Fig. 19 to add an item to the wish list of selected items. The click gives display of the index page for wish list registry shown in Fig. 13. The recipient retrieves the catalog to find a desired item for the gift and clicks the selection tab KG of the desired item to add the item to the wish list of selected items. In response to addition of the desired item, the wish list of gift items is updated to include the additional item.

In the gift service system of the embodiment discussed above, the recipient who is expected to receive a gift registers the individual information and asks for permission to access the server SV1 via the network using the host ID and host password. The server SV1 identifies the input of the host ID and the host password registered in advance and gives authorization for access. The recipient who has the permission for access registers a wish list including at least one item desired for the gift in the storage device 34. This arrangement effectively prevents items from being registered in the storage device 34 of the server SV1 by any unauthorized access for fun or harassment. The giver who desires to give the gift receives the guest password and gains access to the server SV1 with the guest password. Only people who are notified of the guest password can refer to the wish list of items registered by the recipient. Namely only the givers who desire to give the gift can refer to the registered wish list of items and gift the desired items selected by the recipient. Using the password to refer to the registered wish list of items desirably protects the privacy of the guests and prevents unauthorized accesses for fun or harassment.

The gift service system of this embodiment enables each recipient who is expected to receive some gift for wedding, graduation, or another event to receive desired items without any overlap. The gift service system also enables each giver to gift one or plural items desired by the recipient without any specific labor of going shopping or arrangement for delivery. Various pieces of information registered on the server are protected from any third person.

The following describes a second embodiment of the present invention. The gift service system of the second embodiment implements gift mediation of items commercially available from another site on the network. The gift service system of the second embodiment is attained by the hardware configuration similar to that of the first embodiment shown in Fig. 1. The differences from the first embodiment are the presence of another server SV2 and the extended range of selection for gift items. The same constituents and functions as those of the first embodiment are just briefly described or omitted from the description. Such easy extension is ascribed to the characteristic of the system using the network like the Internet, in which any terminal is readily connectable to another site via the network NW by simply specifying an address.

The hardware configuration shown in Fig. 1 is also applied to actualize the gift service system of the second embodiment. The server SV2 used in the second embodiment is constructed as a computer that receives requirements output from the first terminal 80, the second terminal 90, and the server SV1 via the network NW and processes these requirements. Like the server SV1 discussed in the first embodiment, the server SV2 includes a CPU, a ROM, a RAM, a memory controller, a display controller, a serial input-output interface, a storage device, a keyboard interface, a printer interface, and a diversity of other units.

The terminals 70, 80, and 90 and the servers SV1 and SV2 are mutually connected via the network NW. All the terminals 70, 80, and 90 and the servers SV1 and SV2 have addresses that are allocated to identify themselves on the network NW (IP addresses when the TCP/IP protocol is adopted). The respective terminals 70, 80, and 90 gain access to the servers SV1 and SV2 using these addresses to enable processing and transmission of data to and from the servers SV1 and SV2. Either of the two servers SV1 and SV2 may also access the other server to enable processing and transmission of data between the two servers SV1 and SV2. Permission to access the server SV1 is given to all the terminals, but passwords are assigned to specific files and data provided in the server SV1. Only the user who satisfies preset conditions can gain access to the specific files and data. The procedure of setting the passwords has been discussed previously.

As described previously, the server SV1 reveals general information like the outline of service to even unauthorized accesses without the password. A diversity of services like registry service discussed later are executed only in response to authorized accesses from legitimate users verified by the password. The basic operations of the server SV1 in the second embodiment are identical with those discussed in the first embodiment.

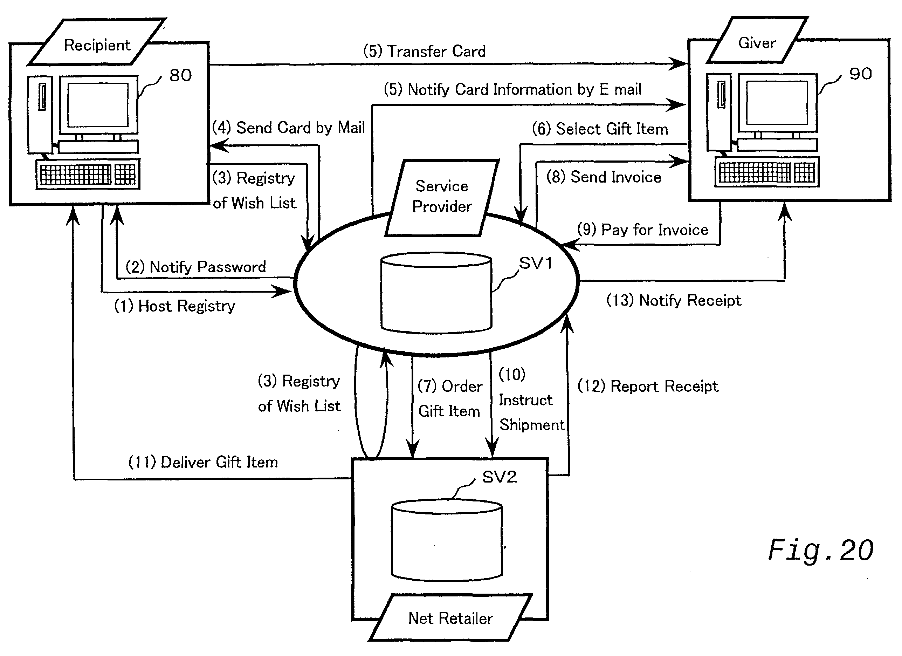

The following describes the contents of the gift service system executed in the above hardware configuration. Fig. 20 is a block diagram illustrating the contents of the gift service system in the first embodiment. The processes (1) to (13) shown in Fig. 20 except the process (3) 'registry of wish list' are practically identical with those discussed in the first embodiment. In order to gain the service of the system, the recipient gains access from the own computer, the first terminal 80 in this embodiment, to the server SV1 owned by the service provider for host registry (1). On completion of the host registry, the service provider opens a site for the recipient with the host registry (hereinafter referred to as the registrant or the host) in the server SV1 and issues a host ID and a host password to authorize access to this site by the host. The service provider then notifies the registrant of the host ID and the host password (2).

The registrant who is notified of the host password again gains access from the first terminal 80 to the server SV1 and inputs the host ID and the host password. The input allows the registrant to visit the host site and enter a diversity of registry services.

A catalog created by the service provider is provided in the host site in a specific format that allows the registrant to check the specification of the respective items. The host site has a link to a sales site in the server SV2 managed by the net retailer. The registrant refers to the catalog or accesses the linked sales site, selects desired items, and registers a wish list of the selected items on the host site (3).

The series of processing after completion of the wish list registry is essentially similar to that of the first embodiment. Unlike the first embodiment, however, in the system of the second embodiment, items available from another site may be selected for the wish list registry of the gift, so that the items of the third person are involved in settlement. In the case where the net retailer accepts an order for an item on the premise of payment, the service provider temporarily pays for the giver to the net retailer when making the order for the item. In the case where the net retailer does not accept delivery of an item at a specified date long after the date of ordering, the service provider receives the item and keeps the item until the specified date of delivery. These procedures ensure adequate order and delivery of the item selected by the giver.

The above description regards the contents of the gift service system. The following describes the diverse services, that is, the registry service, the gift item specification service, and the shipment management service, executed by the server SV1 to attain the gift service system. The registry service, the gift item specification service, and the shipment management service respectively correspond to the steps (1) to (5), the steps (6) to (8), and the steps (9) to (13) shown in Fig. 20 and are executed by the computer in the server SV1. The registry service, the gift item specification service, and the shipment management service are thus carried out in this order.

The details of the registry service have been discussed previously as the registry service routine of the first embodiment shown in Fig. 3. The details of the gift item specification service have been discussed previously as the gift item specification service routine of the first embodiment shown in Fig. 4. The details of the shipment management service have been discussed previously as the shipment management service routine of the first embodiment shown in Fig. 5.

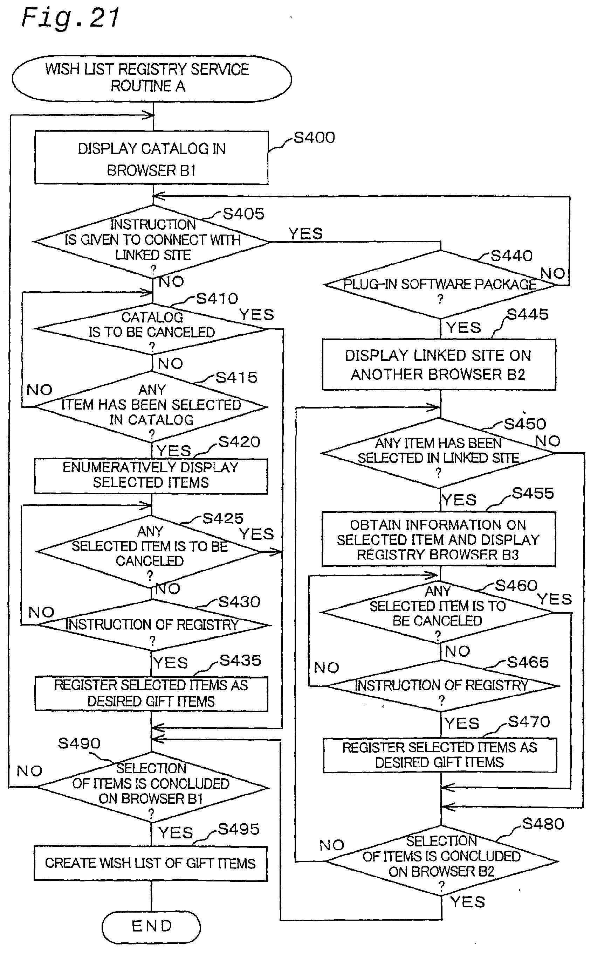

The following describes the wish list registry service, which is characteristic of the second embodiment. The wish list registry service shown as the process (3) is attained by execution of a wish list registry service routine A shown in Fig. 21. The routine A is executed by the server SV1, which has received a requirement for selection of one or plural gift items from the first terminal 80 via the network NW, and is activated in response to verified identity with the host ID and the host password by the processing of step S110 in Fig. 3.

When this routine is activated, the program first transmits data of a catalog created by the service provider and displays the catalog (step S400). The catalog is displayed on a browser B1, which is the main browser provided by the service provider. The catalog including images and specifications of respective items is then displayed on the display 80b of the first terminal 80 in a specific manner that allows selection of any item included in the catalog.

The program then determines whether or not any instruction is given on the browser B1 to connect with a linked sales site provided by the net retailer (step S405). When there is no instruction to connect with the linked site, the program successively determines whether or not the displayed catalog is to be canceled and whether or not any item has been selected in the displayed catalog (steps S410 and S415).

When any item is selected in the catalog, the program enumeratively displays all the selected items on the browser B1 (step S420). The program subsequently determines whether or not any selected item is to be canceled and whether or not all the selected items are to be registered (steps S425 and S430). When there is an instruction to register all the selected items, the selected items are registered as desired gift items (step S435).

On completion of registry of the items selected in the catalog as the desired gift items, the program determines whether or not an instruction is given to conclude selection of items on the browser B1 (step S490). The program also carries out such decision when no item has been selected in the catalog at step S410 and when any selected item is to be canceled at step S425. When there is no instruction to conclude selection of items on the browser B1, the program returns to step S400 to display the catalog again on the browser B1 and repeats the above series of processing. When there is an instruction to conclude selection of items on the browser B1, on the other hand, the program creates a wish list of gift items, based on the selection and registry (step S495). The program then exits from this routine.

The following discussion regards a process of registering items out of the catalog as the desired gift items (steps S405 to S480). When it is determined at step S405 that there is an instruction to connect with the linked sales site provided by the net retailer, the program subsequently determines whether or not a plug-in software package PP has been downloaded to the first terminal 80 (step S440). The plug-in software package PP includes programs and data for obtaining required information, such as addresses in the linked site, and incorporating the obtained information into the wish list registry information in the server SV1. When the plug-in software package PP has not yet been downloaded, the program returns to step S405 and gives a warning to demand immediate downloading.

When the plug-in software package PP has already been downloaded, on the other hand, the program opens a sub-browser B2, which is different from the browser B1, and displays the linked sales site on the sub-browser B2 (step S445).

The program then determines whether or not any item in the sales site has been selected as a desired gift item (step S450). The decision is implemented by a program included in the plug-in software package. As the plug-in software package is downloaded, a shortcut menu is added to the first terminal 80 to allow registry of items in the sales site as desired gift items in the gift service system. Any selected item in the sales site based on the shortcut menu is regarded as the desired gift item. A concrete procedure to attain this series of processing will be discussed later.

When any item in the sale site has been selected as the desired gift item, the program obtains information on the selected item and displays a registry browser B3, which is different from the sub-browser B2 (step S455). The information on the selected item is obtained by utilizing information on the position of the mouse pointer. The procedure reads information on properties of an image or a tab at a specific position, which overlaps the position of the mouse pointer, by the function of the plug-in software and obtains the URL of the image or the tab from the properties information.

Other methods may be adopted to obtain the information on the selected item. One applicable procedure utilizes the software or hardware that actualizes the proxy server function to obtain the URL of the image or the tab. Another applicable procedure gives an instruction on the first terminal 80 to download information of character and photographic images on the selected item to the server SV1. Still another applicable procedure takes a screen shot of a specific range including a desired item on a page displayed on the sub-browser B2 and gives an instruction to download the screen shot to the server SV1.

The registry browser B3 has fields describing the product name, the product number, the price, and other specifications of each item selected as the desired gift item. Entry of required information in the respective fields is demanded for registry of items as the desired gift items. A concrete example of the registry browser B3 will be discussed later. In the system of this embodiment, the URL of the image or the tab obtained by the function of the plug-in software is displayed in a predetermined field on the registry browser B3.

The program then determines whether or not any selected item is to be canceled and whether or not all the selected items are to be registered (steps S460 and S465). When there is an instruction to register all the selected items, the selected items are registered as desired gift items (step S470). The program then closes the registry browser B3.

On completion of registry of the items in the sales site as the desired gift items, the program determines whether or not an instruction is given to conclude selection of items on the browser B2 (step S480). The program also carries out such decision when no item has been selected in the sales site at step S450 and when any selected item is to be canceled at step S460. When there is no instruction to conclude selection of items on the browser B2, the program returns to step S450 and repeats the above series of processing while keeping the browser B2 open for selection of another item.

When there is an instruction to conclude selection of items on the browser B2, the program closes the browser B2 and determines whether or not further selection of items is required on the browser B1. When there is an instruction to conclude selection of items on the browser B1, the program creates a wish list of gift items, based on the selection and registry (step S495). The program then exits from this routine.

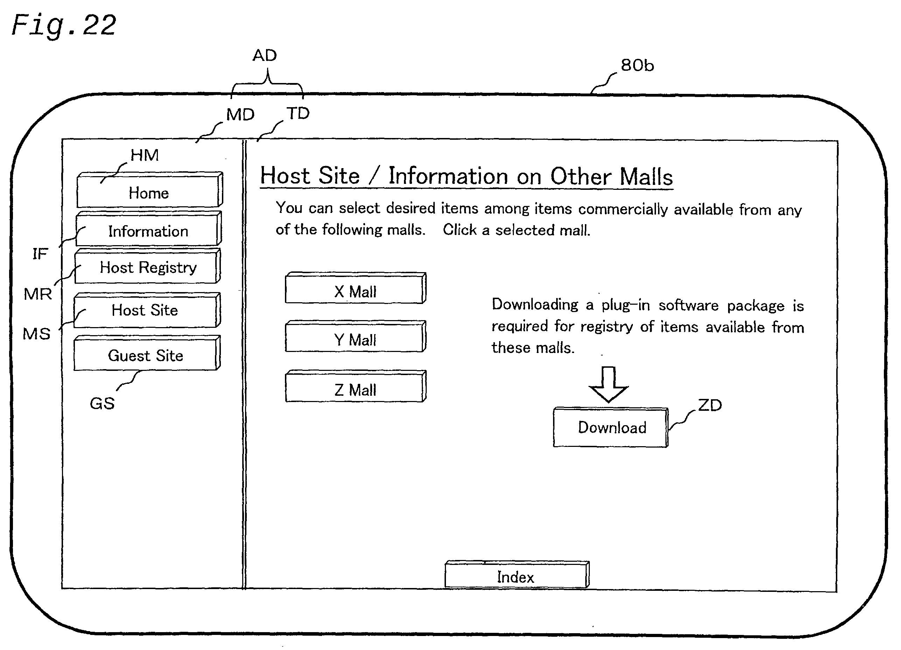

The above description regards the details of the registry service, the gift item specification service, and the shipment management service executed in the gift service system. A concrete example of the registry service and the gift item specification service, or more specifically the wish list registry service, is discussed below with referring to Figs. 22 to 26. The drawings used for description of the first embodiment are also referred to when necessary.

A click of the 'Wish List Registry' tab SR on the information window shown in Fig. 9 and discussed in the first embodiment gives display of the index page for wish list registry shown in Fig. 13 on the display 80b.

In the index page, the diversity of items are classified into four large categories 'Stylish', 'Tasteful', 'Comfortable', and 'Cheerful', and each category has several sub-categories as shown in Fig. 13 (for example, bags, watches, and accessories are included in the 'Stylish' category). The recipient clicks a category name tab in the displayed window with the mouse 80e to open a window for displaying items registered under the clicked category name.

In this embodiment, it is assumed that the recipient visits another sales site for selection of items. A click of an 'Index' tab on the wish list registry window for selecting items in the catalog as discussed in the first embodiment and shown in Fig. 12 changes the display to the index page shown in Fig. 13. A click of the 'Other Malls' tab ZE on the index page gives display of a sales site information window, which shows other sales sites on the Internet, 'X Mall', 'Y Mall', and 'Z Mall' as links.

On the sales site information window (Fig. 22), there is a note telling that downloading the plug-in software package to the first terminal 80 is required for registry of items commercially available from each shopping mall as desired gift items. When the recipient clicks a 'Download' tab ZD to download the plug-in software package according to this note and subsequently clicks an 'X Mall' tab, a sub-browser SD including information on the homepage of the X Mall appears on the display 80b.

In the case where the recipient clicks one of 'X Mall', 'Y Mall', and 'Z Mall' tabs without downloading the plug-in software package, the display includes a note telling that download of the plug-in software package is automatically executed and selection tabs 'YES' and 'NO' to choose either execution or non-execution of the automatic downloading. A click of the selection tab 'YES' causes the plug-in software package to be downloaded.

Once the plug-in software package is downloaded, the recipient can select items in not only the sales sites 'X Mall', 'Y Mall', and 'Z Mall' displayed on the sales site information window but other sales site and register the selected items as desired gift items.

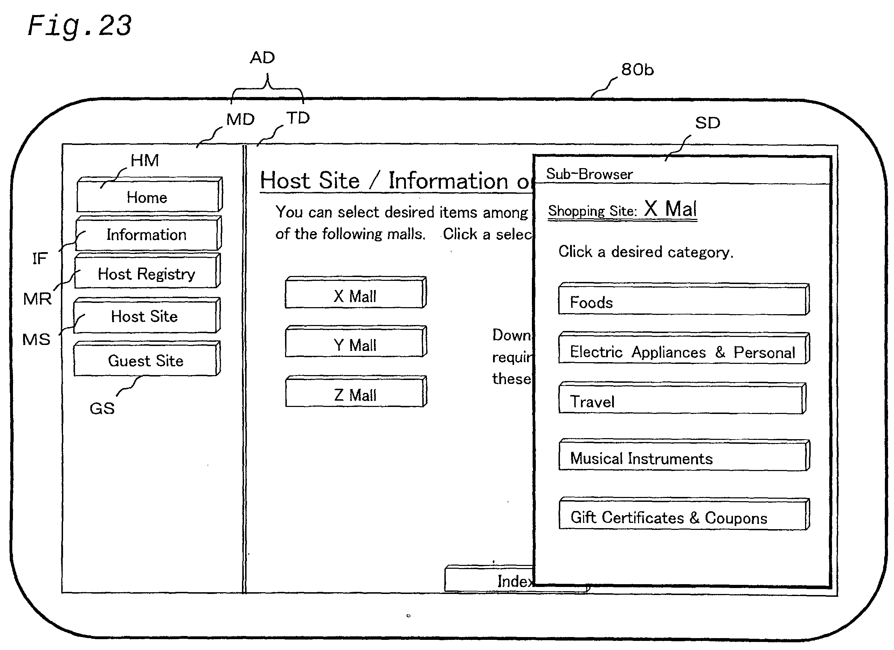

Fig. 23 shows the sub-browser SD that appears on the display 80b and includes information on the homepage of the X Mall. The home page of the linked sales site 'X Mall' is displayed on the sub-browser SD as shown in Fig. 23. The home page shows five tabs respectively showing category names of items, 'Foods', 'Electric Appliances & Personal Computers', 'Travel', 'Musical Instruments', and 'Gift Certificates & Coupons'. These category names of items, for example, 'Gift Certificates & Coupons' may not be included in the index page of the catalog shown in Fig. 21.

As shown in Fig. 23, the sub-browser SD is laid upon the main blower AD. Even when the recipient enters lower levels of the hierarchical structure of the 'X Mall' to find desired items, the main browser AD is kept to display the sales site information window. The recipient can thus readily return to the main browser AD after retrieval of items in the 'X Mall'.

The sub-browser SD is located at a specific position that keeps the 'X Mall', 'Y Mall', and 'Z Mall' tabs appear on the left side of the text window TD as shown in Fig. 23. This layout enables the recipient to find the 'Y Mall' tab or the 'Z Mall' tab at a glance and immediately click the desired tab with the mouse 80e, in order to retrieve items in another sales site 'YMall' or 'Z Mall' after the connection with the 'X Mall'. Namely the sub-browser SD does not interfere with any click operation to establish connection with another sales site.

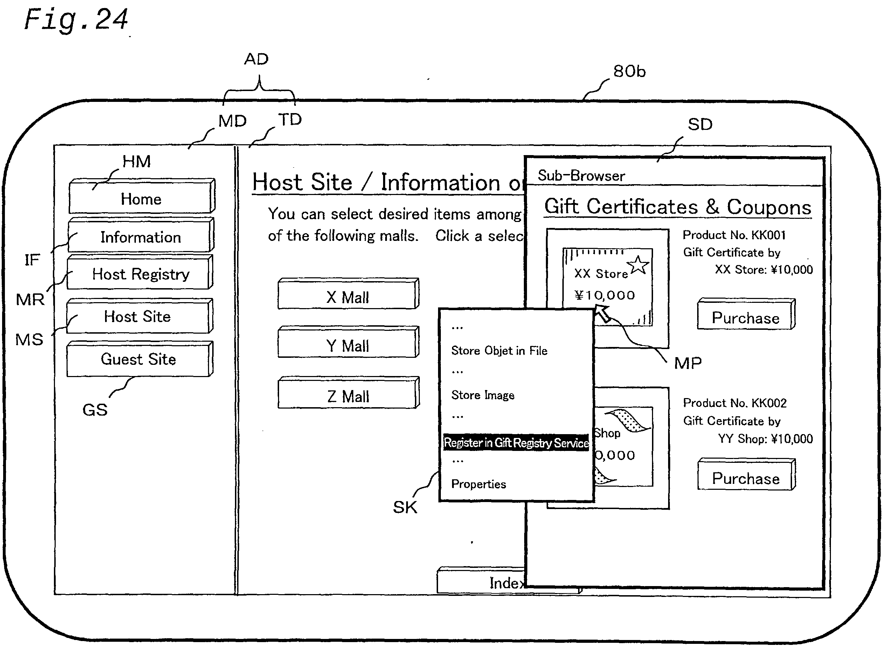

A click of a selected category name with the mouse 80e in the home page on the sub-browser SD shown in Fig. 23 gives display of items registered under the selected category name. Here it is assumed that the category name tab 'Gift Certificates & Coupons' is clicked. A catalog including available gift certificates and coupons then appears on the sub-browser SD of the display 80b as shown in Fig. 24. The catalog includes photographic images showing the appearance of the respective gift certificates and coupons and information on the product number, the product name, and the price of the respective gift certificates and coupons.

The recipient places a mouse pointer MP on the photographic image of an item selected in the catalog as an option of the desired gift item. In the example of Fig. 24, the mouse pointer MP points to the photographic image of 'Gift Certificate by XX Store' selected for the desired gift item. In this example, it is assumed that the 'Recipient 1' Taro Tokkyo selects ' 'Gift Certificate by XX Store' for the desired gift item.

The recipient locates the mouse pointer MP on the photographic image of 'Gift Certificate by XX Store' and right clicks the mouse 80e. A shortcut menus SK then appears in the vicinity of the mouse pointer MP as shown in Fig. 24. The shortcut menu SK includes an option 'Register in Gift Registry Service', which has been added by the function of the downloaded plug-in software. The recipient scrolls the mouse 80e on the shortcut menu SK to set the reverse display zone to the option 'Register in Gift Registry Service' and left clicks the mouse 80e. This results in selecting 'Gift Certificate by XX Store' for the desired gift item.

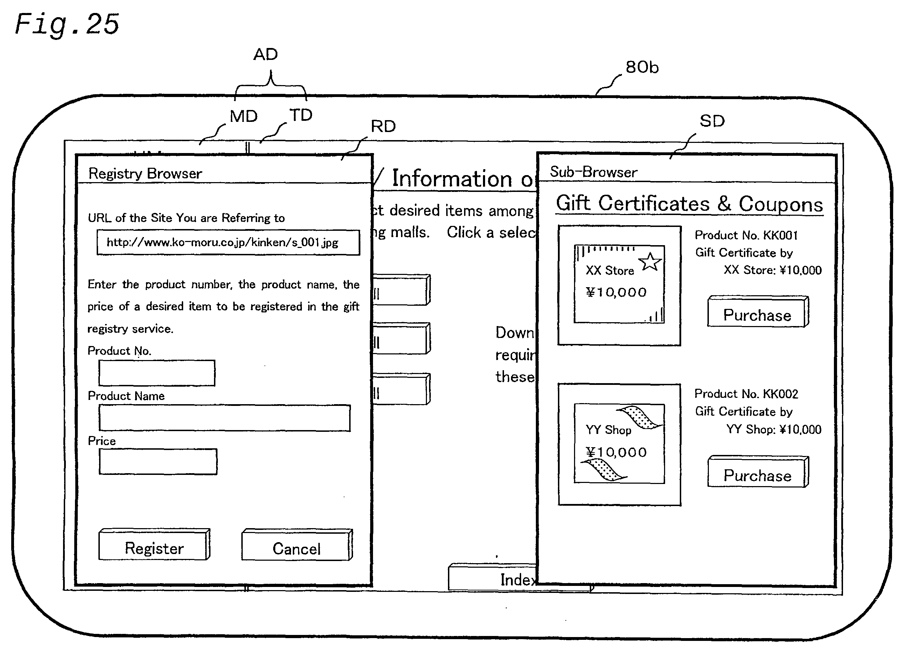

On completion of selection of the item, the shortcut menu SK disappears and a registry browser RD, which is different from the main browser AD and the sub-browser SD, appears upon the main browser AD on the display 80b as shown in Fig. 25. The registry browser RD shown in Fig. 25 has fields 'URL of the Site You are Referring to', 'Product No.', 'Product Name', and 'Price'.

At the time when the registry browser RD opens, the URL information corresponding to the photographic image of the item selected for the desired gift item (Gift Certificate by XX Store in the example of Fig. 25) has already been entered in the field 'URL of the Site You are Referring to'. The URL information is obtained by the function of a program included in the plug-in software package when the recipient locates the mouse pointer MP on the photographic image of 'Gift Certificate by XX Store' and right clicks the mouse 80e in the process of selection of the item. This arrangement automatically displays the URL information for identifying the desired gift item on the registry browser RD, thus relieving the recipient's load of the input-related operations.

The URL information on the item selected by the recipient in the catalog provided by the service provider is also automatically obtained by execution of the program included in the plug-in software package at a specific timing.

The display of the URL information corresponding to the desired gift item enables the recipient to register the desired gift item by simply clicking a 'Registry' tab on the registry browser RD. In the actual operations, however, the recipient may mistakenly locate the mouse pointer MP or the manager of the sales site may change the URL information. In such cases, the desired gift item selected by the recipient can not be identified accurately. In order to handle such troubles, in the system of the first embodiment, the recipient is required to input the respective pieces of information on the item selected for the desired gift item into the fields 'Product No.', 'Product Name', and 'Price' through operations of the keyboard 80d. In the example of Fig. 25, the recipient enters 'KK001', 'Gift Certificate by XX Store', and '¥10,000' respectively into the fields 'Product No.', 'Product Name', and 'Price' as the information regarding 'Gift Certificate by XX Store'.

After the entry of such pieces of information, the recipient clicks the 'Register' tab on the register browser RD. This causes the selected item in another sales site (in the above example, Gift Certificate by XX Store in X Mall) to be registered as the desired gift item of the 'Recipient 1' Taro Tokkyo. The wish list of gift items is created, based on the registry, as described in detail in the first embodiment.

The registry browser RD appears at a specific position not to overlap the sub-browser SD as shown in Fig. 25. This layout enables the recipient to accurately and quickly register the desired gift item, while checking the product number, the product name, the price, and the photographic image of the selected item. Since the registry browser RD and the sub-browser SD are visually recognizable at the same time, no special operation is required to move the registry browser RD or the sub-browser SD for the check.

On completion of the 'recipient registry' and the 'wish list registry' by the recipient, message cards, each including the address of the home page of the 'Gift Registry' service, a guest ID, and a guest password, are sent to the recipient by mail. The recipient transfers the message card to each guest to enable access to the guest site by the guest. The subsequent series of processing is identical with that of the first embodiment and is briefly explained here.

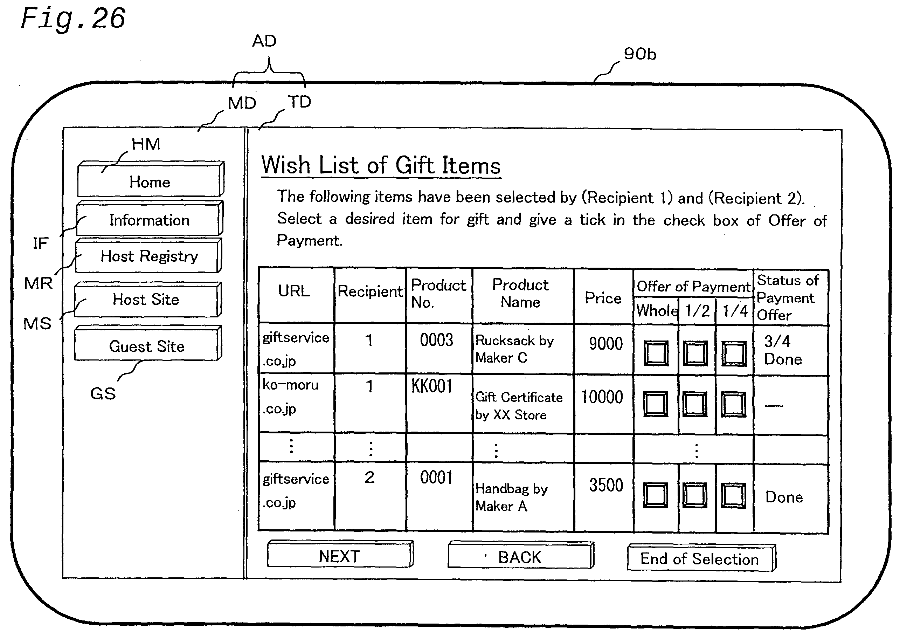

When the guest gains access from the second terminal 90 to the server SV1, the initial window shown in Fig. 6 appears on the display 90b. The guest clicks the 'Guest Site' tab GS in the initial window with the mouse 90e to open a window for entering the guest site in the text window TD as shown in Fig. 16. Only the entry of the right guest ID and guest password allows access to information in the guest site. The guest enters the assigned guest ID and guest password in the respective fields and clicks a 'GO' tab to open a window displaying a wish list of gift items shown in Fig. 26.

The wish list of gift items includes information on the respective items selected by the recipients. In the example of Fig. 26, the display includes information input in the course of registry of desired gift items, for example, the URL of the site to be referred to, the product number, the product name, and the price, with regard to the items including 'Rucksack by Maker C' and 'Gift Certificate by XX Store' selected by the 'Recipient 1' Taro Tokkyo and the items including 'Handbag by Maker A' selected by the 'Recipient 2' Hanako Tokkyo. The URL to be referred to is required, since some of the items are available from external sales sites, such as an external shopping mall.

The display of the items selected by the Recipient 1 is followed by the display of the items selected by the Recipient 2 in the wish list of gift items shown in Fig. 26. The classified display of the selected items by each recipient enables the guest to readily select a desired item for the gift to a specified recipient.

In the case where the recipients have selected a large number of items, a click of a 'NEXT' tab in the wish list window of Fig. 26 gives display of information on other selected items.

Boxes 'Offer of Payment' and 'Status of Payment Offer' are provided for each selected item on the right side of the wish list of gift items. The details of such boxes and the related processing by the guest are identical with those of the first embodiment and are thus not specifically described here.

On completion of registry of the selected item for gift, the service provider of the 'Gift Registry' service sends an invoice to the guest, based on the registered information. The service provider confirms actual payment for the price of a selected item by each guest and sends the selected item to each recipient as the gift from the guest. In the case where the price of one item is dividedly paid by a plurality of guests as discussed above, the item is sent to the recipient as the share gift by the plurality of guests, on completion of the payment for the whole price by the respective guests.

In the case where any item in another sales site is registered as a desired gift item, the service provider temporarily pays for the registered item and purchases the item from the net retailer, based on the URL information and the product number in the registry. When the guest offers payment for this item, the service provider sends an invoice to the guest, confirms actual payment for the price of the item by the guest, and sends the item to the recipient as the gift from the guest.

Like the first embodiment, the gift service system of the second embodiment discussed above enables the recipient, who is expected to receive some gift, to receive desired items without any overlap. The system of the second embodiment has the additional advantage that extends the range of selection of items to other sales sites on the network NW. The recipient can select desired gift items in a wider range of items. This enhances satisfaction of the recipient.

The recipient who visits another sales site not via the gift service system but independently has difficulties in selecting any item in the sales site as a desired gift item. The recipient does not pay for the selected item, while the sales site generally does not sell any item without a definite promise of payment. The gift service system of the first embodiment satisfies the requirement 'selected items should be kept aside for gift as some of the givers will pay for the items', which is generally not fulfilled by the independent communication of the recipient with another sales site.

In the gift service system of the second embodiment, the recipient can select items in the catalog provided by the service provider or in another sales site by simply gaining access from the first terminal 80 to the server SV1 or SV2 via the network NW. This system enables the recipient to select desired gift items among a diversity of items without going out.

During the access to the 'Gift Registry' service, the recipient may temporarily jump to another sales site and immediately register the desired gift items, which have been selected in the sales site, into the 'Gift Registry' service. This system does not require the recipient to perform any complicated operations. The service provider utilizes the purchase ability (stock and orders) of another entity and deals with a greater number of items. The increase in number of available items in this manner neither requires the service provider to open a lot of new accounts nor makes the load of stock heavier. The link of the net retailer to the 'Gift Registry' service expands the demands in the field of gift registry.

The following describes a gift service system in a third embodiment. The gift service system of the third embodiment is attained by the hardware configuration similar to that of Fig. 1. The difference from the second embodiment is that the server SV2 owned by the net retailer is replaced by the third terminal 70 owned by a storefront retailer. In the gift service system of the third embodiment, the server SV1 carries out the registry service in response to instructions from the first terminal 80 and the third terminal 70, the gift item specification service in response to instructions from the second terminal 90, and the shipment management service in response to instructions from the third terminal 70.

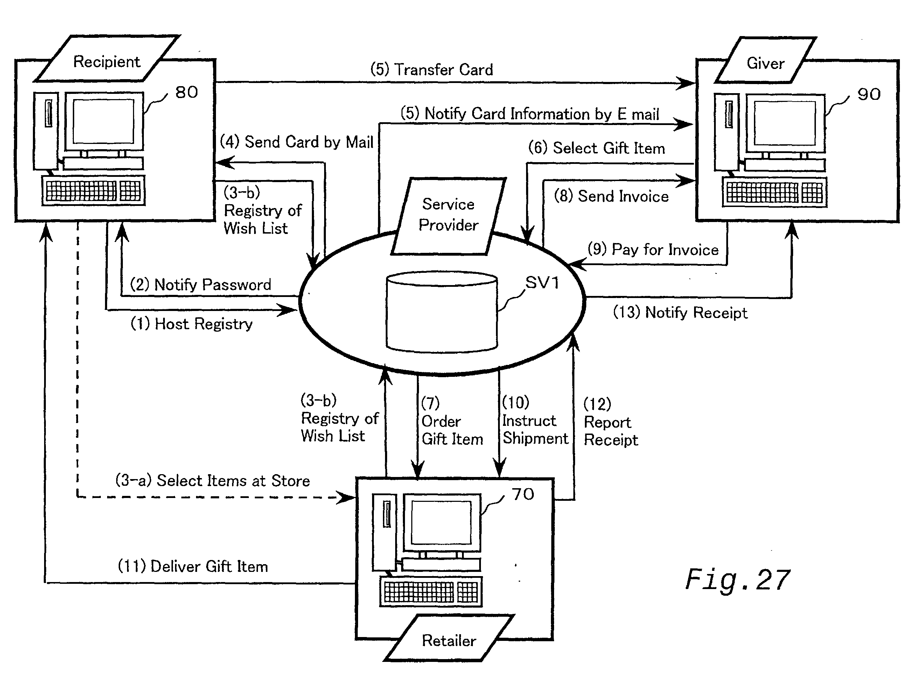

The contents of the gift service system executed in this hardware configuration are shown in the block diagram of Fig. 27. The difference from the gift service system of the second embodiment is the process (3) that the recipient selects items at the storefront of a shop owned by the retailer for registry of the selected items as desired gift items as shown in Fig. 27. The recipient who is expected to receive some gift goes to the shop of the retailer associated with the service provider, selects items among available items in the shop as desired gift items, and notifies the retailer of conclusion of selection (3-a). The retailer receiving the notification gains access from the third terminal 70 and registers the items selected by the recipient as the desired gift items on the host site. The recipient who has selected the items may alternatively gain access from the first terminal 80 and carry out the registry on the host site.

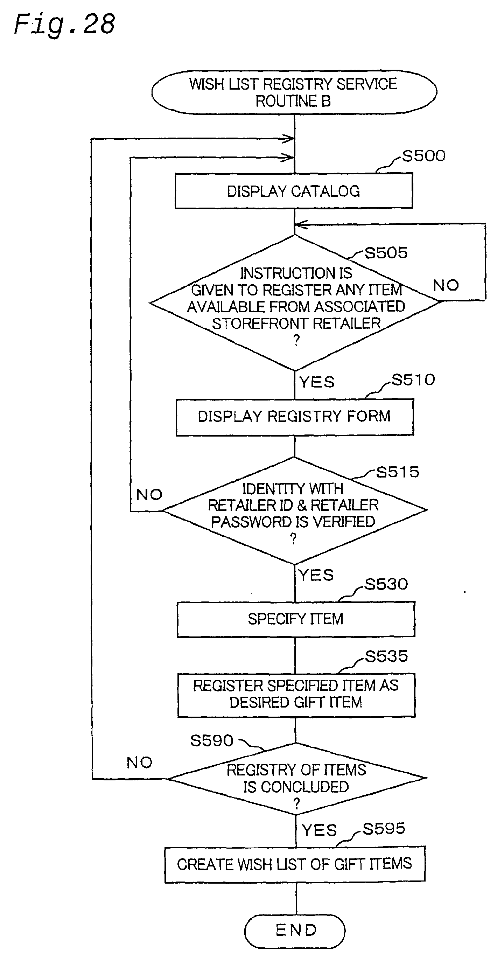

The registry service, the gift item specification service, and the shipment management service executed by the server SV1 are similar to those of the first embodiment discussed previously with referring to Figs. 3 through 5. The details of the wish list registry process (step S130 in Fig. 3) are different from the first embodiment. The wish list registry process of the third embodiment is shown as a wish list registry service routine B in the flowchart of Fig. 28. The routine B is executed by the server SV1, which has received a requirement for registry of desired gift items from the third terminal 70 via the network NW, and is activated in response to verified identity with the host ID and the host password input from the third terminal 70 by the processing of step S110 in Fig. 3.

When this routine is activated, the program first transmits data of a catalog created by the service provider and displays the catalog (step S500). The program then determines whether or not any instruction is given to register any item available from an associated storefront retailer in the window displaying the catalog ( step S505). When there is no such instruction, the program returns to step S505 and repeats the decision.

When there is such an instruction, on the other hand, the program transmits data of a registry form and dïsplays the registry form (step S510), and identifies the input of a retailer ID and a retailer password in the registry form (step S515). The retailer ID and the retailer password are used to verify that the entity of registry of items is the storefront retailer. The registry form has fields for entering the product name, the product number, and the price of the item selected by the recipient, in addition to the fields of the retailer ID and the retailer password. A concrete example of the registry form will be discussed later.

In the case of entry of the wrong retailer ID or retailer password in the registry form, the program gives warning of failed authentication and returns to step S500 to display the catalog again. The connection with the host site may be cut off when three consecutive inputs for the combination of the retailer ID and the retailer password are incorrect. This arrangement desirably prevents vicious registry by non-associated retailers.

In the case of entry of the right retailer ID and retailer password in the registry form, on the other hand, the program specifies the item selected by the recipient, based on the information written in the registry form (step S530) and registers the specified item as a desired gift item (step S535).

After the registry of any item available from the associated retailer as the desired gift item, the program determines whether or not an instruction is given to conclude registry of items (step S590). When there is no instruction to conclude registry of items, the program returns to step S500 to display the catalog again and repeats the above series of processing. When there is an instruction to conclude registry of items, on the other hand, the program creates a wish list of gift items, based on the registry (step S595). The program then exits from this routine.

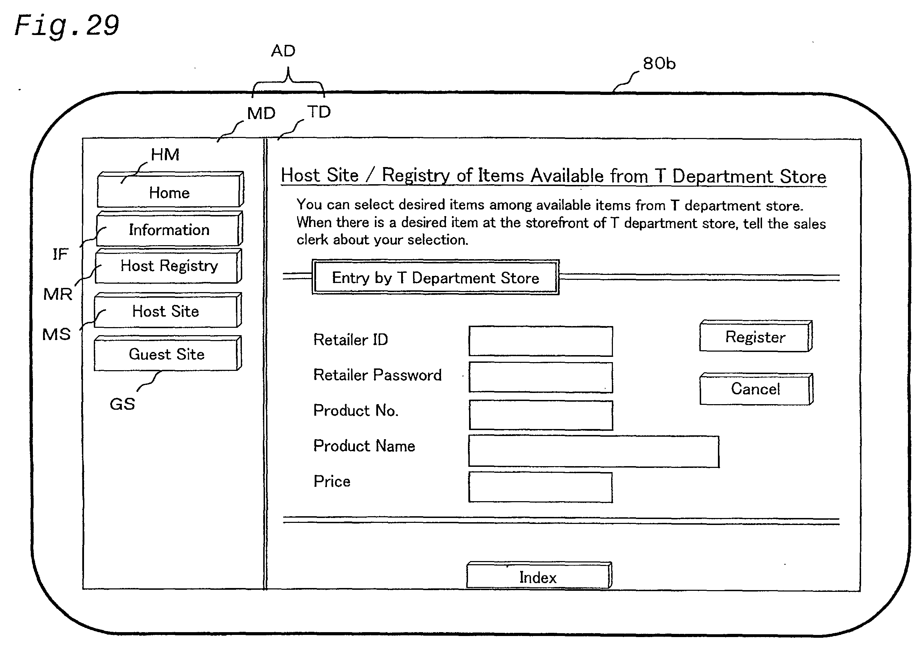

The following describes one application of the gift service system of the third embodiment, based on the wish list registry. When the recipient with the host registry clicks the 'Wish List Registry' tab SR on the information window shown in Fig. 9, the index page for wish list registry shown in Fig. 13 appears on the display 80b. A click of the 'T Department Store' tab ZH on the index page gives display of a gift item registry window shown in Fig. 29.

The gift item registry window includes a note telling that the 'Gift Registry' service is associated with T department store and the recipient can select items at the storefront of T department store and register the selected items as desired gift items as shown in Fig. 29. There is an input box by T department store, below this note. The input box includes fields of the retailer ID and the retailer password, as well as fields for entering the product name, the product number, and the price of the item selected by the recipient.

The recipient reading the note on the gift item registry window may go to the shop of T department store, actually see items or check items in an offline catalog, and select one or plural items as desired gift items. The recipient tells the sales clerk at the service counter of T department store about selection of the desired gift items. The sales clerk then gains access from the third terminal 70 in T department store to the server SV1. The initial window of the 'Gift Registry' service shown in Fig. 6 then appears on the display 70b of the third terminal 70. The sales clerk clicks the 'Host Site' tab MR with the mouse 70e to display the window for entering the host site shown in Fig. 8, enters the host ID and the host password, which are notified by the recipient, and clicks the 'GO' tab. This changes the display to the information window shown in Fig. 9. A click of the 'Wish List Registry' tab SR on the information window gives display of the index page for wish list registry shown in Fig. 21 on the display 70b.

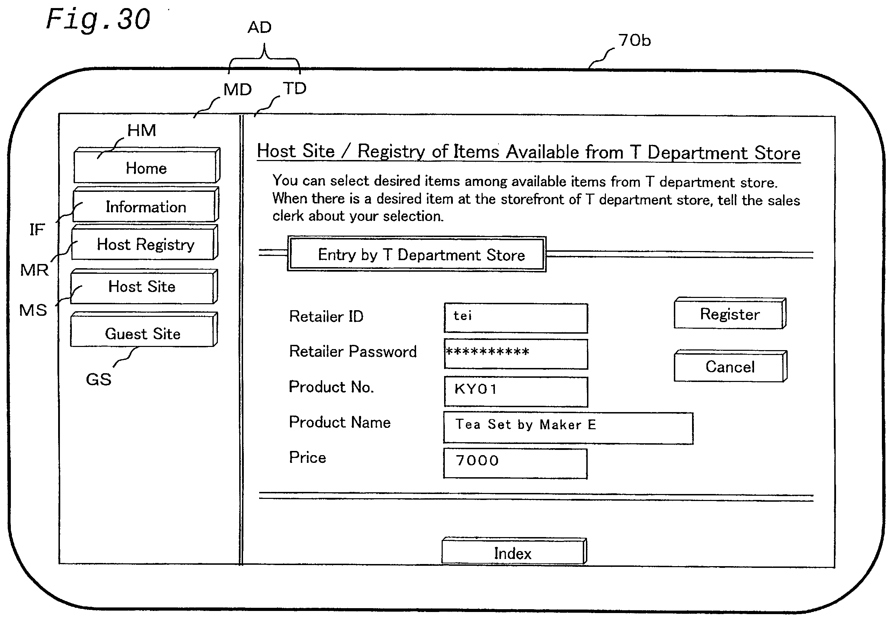

A click of the 'T Department Store' tab ZH on the index page gives display of the gift item registry window shown in Fig. 29 on the display 70b. The sales clerk enters the retailer ID and the retailer password, which has been assigned to T department store, and the product number, the product name, and the price of the item selected by the recipient as the desired gift item, in the input box by T department store on the gift item registry window. In this example, the 'Recipient 1' Taro Tokkyo selects an item 'Product Name: Tea Set by Maker E, Product No.: KY01, Price: ¥7,000' as a desired gift item. Fig. 30 shows the gift item registry window with such entry.

After the entry of the required information, the sales clerk clicks a 'Register' tab with the mouse 70e. This completes registration of the item available from T department store (in this example, 'Tea Set by Maker E') as a desired gift item of the 'Recipient 1' Taro Tokkyo.

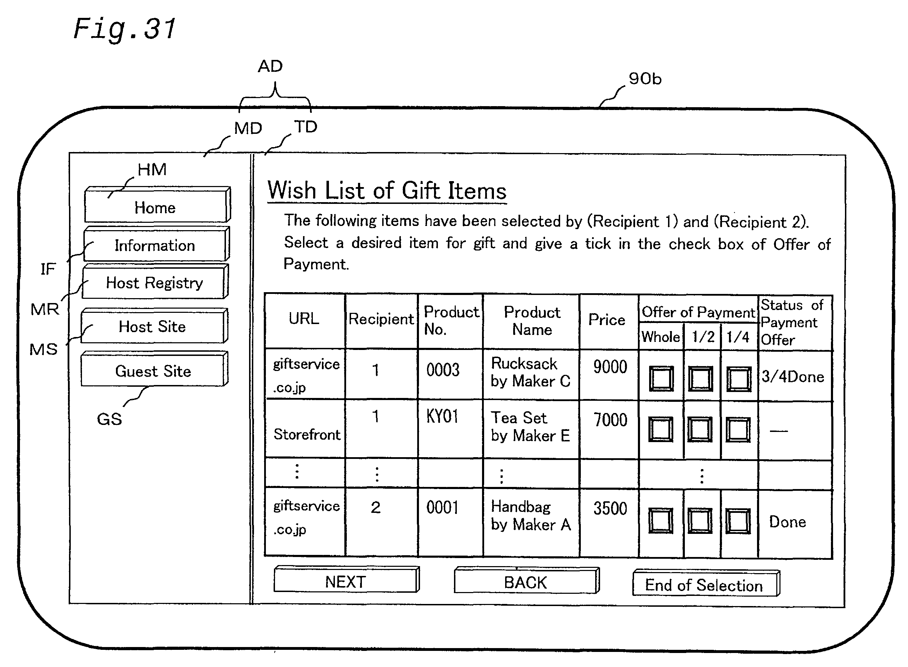

A wish list of gift items is then created, based on the registry as shown in Fig. 31. In the example of the third embodiment, the display includes information input in the course of registry of desired gift items, for example, the URL of the site to be referred to, the product number, the product name, and the price, with regard to the items including 'Rucksack by Maker C' and 'Tea Set by Maker E' selected by the ' Recipient 1' Taro Tokkyo and the items including 'Handbag by Maker A' selected by the 'Recipient 2' Hanako Tokkyo. As for the item 'Tea Set by Maker E' selected at the storefront by the recipient, the term 'Storefront' is entered in the field for the URL of the site to be referred to.

Like the first and the second embodiments, each giver or guest selects one or plural items for gift to the recipient among the items included in the wish list and ticks corresponding check boxes in the 'Offer of Payment' box to offer the payment for the selected items. The service provider of the 'Gift Registry' service sends an invoice to the guest, based on the registered information. The service provider confirms actual payment for the price of a selected item by each guest and sends the selected item to each recipient as the gift from the guest.

The gift service system of the third embodiment discussed above enables the recipient, who is expected to receive some gift, to receive desired items without any overlap, while extending the range of selection of items to associated shops. The recipient can select desired gift items in a wider range of items. This enhances satisfaction of the recipient.

The gift service system of the third embodiment allows the recipient to select an item by actually seeing the item, checking the item in the offline catalog, or taking some advice from the sales clerk. The recipient can thus receive the items of desired quality. In cooperation with a large-scaled department store, the service provider can utilize the storage capacity and the shipment capacity of the department store as well as the purchase ability (stock and orders). Such cooperation allows flexible shipment service and meets the individual requirement regarding the date of delivery specified by each recipient, for example, the requirement of delivery on a specified date long after the selection of the item by the recipient.

The present invention is not restricted to the above embodiments or their modifications, but there may be many other modifications, changes, and alterations without departing from the scope or spirit of the main characteristics of the present invention. For example, the technique of the present invention is applicable to another gift registry system where one giver gifts a plurality of recipients with respective desired gifts as in the case of favors for some event. In such cases, the giver registers a plurality of items categorized by the price zone in a server and sets different passwords to different price zones. The recipient accesses the server using a password assigned to a specific price zone and selects a desired item among a plurality of items registered under the category of the specific price zone. Like the embodiments discussed above, this system also implements gift mediation by taking into account the intentions of both the giver and the recipients.

In the above embodiments, the access to the wish list of gift items is allowed by the verified identity with the input guest ID and guest password. One possible modification may simplify the procedure of gaining access to the wish list of gift items. For example, the access may be allowed by the verified identity with only either one of the guest ID and the guest password. In another example, the access to the wish list of gift items may be allowed in response to input of a giver's mail address. In this case, the input of the giver's mail address is regarded as the action reflecting the true intention of the giver for the gift.

In the procedure of the third embodiment discussed above, the desired items for the gift are registered in advance. One available procedure specifies a floor of a specific department store and sets all the items on the floor to possible options for gift to a certain recipient. Each giver who desires to give the gift goes to the floor of interest in the department store and selects a desired item. The sales clerk immediately accesses a server, for example, with a barcode of a price tag attached to the selected item and checks whether or not the selected item has already been bought for the gift to the same recipient.

### Industrial Applicability

The technique of the present invention actualizes efficient gift service and is effectively utilized by manufactures, retailers, and net wholesalers.

## Claims

1. A gift mediation system that implements gift mediation via a network through access to data storage means, which is provided on a server and stores predetermined data therein,
said gift mediation system comprising:
first memory means that stores registry of information on a recipient, who is expected to receive gift, together with individual information used for authentication on the network;
second memory means that stores a password used to authenticate a giver who desires to give the gift on the network;
permission means that identifies the individual information in response to a requirement for access via the network and gives authorization to access said data storage means via the network when identity with at least part of the individual information registered in said first memory means is verified;
wish list registry means that registers a wish list including at least one item for the gift into said data storage means by the authorized access; and
wish list reference means that allows the wish list to be referred to by access via the network using the password stored in said second memory means.

2. A gift mediation system in accordance with claim 1, wherein said first memory means comprises means that stores registry of information on at least two recipients together with individual information on a single individual.

3. A gift mediation system in accordance with claim 1, wherein said first memory means comprises:
event registry means that registers a type of event for the gift; and
means that stores registry of information on a plurality of recipients together with individual information on a single individual when the type of event registered in said event registry means coincides with a preset event involving the plurality of recipients, such as engagement or wedding.

4. A gift mediation system in accordance with any one of claims 1 through 3, said gift mediation system further comprising:
address registry means that registers an address of the giver who desires to give the gift; and
notification means that notifies the address registered by said address registry means of the password and information on a procedure of gaining access to said data storage means, on completion of the registry by said wish list registry means.

5. A gift mediation system in accordance with any one of claims 1 through 4, wherein said wish list registry means comprises:
item information storage means that individually stores information on a plurality of items;
item selection means that causes at least one item to be selected among the plurality of items stored in said item information storage means; and
enumerative display means that displays the wish list of the at least one item selected by said item selection means in an enumerative manner.

6. A gift mediation system in accordance with claim 5, wherein said item information storage means comprises means that stores information on each item with its category in said item information storage means and displays the stored information on the plurality of items classified by the category for selection of the at least one item by said item selection means.

7. A gift mediation system in accordance with either one of claims 5 and 6, wherein said item information storage means stores at least information on a price of each item and a photographic image representing appearance of each item, and
said enumerative display means displays the photographic image of the appearance of each item in a magnifiable manner.

8. A gift mediation system in accordance with any one of claims 1 through 4, wherein said wish list registry means comprises:
item information acquisition means that obtains information on items from another data storage means, which is present on the network, together with information for identifying said another data storage means; and
enumerative display means that extracts at least information on a price of each item and the information for identifying said another data storage means among the information on the items obtained by said item information acquisition means, and displays the extracted information in an enumerative manner.

9. A gift mediation system in accordance with either one of claims 5 and 8, wherein said enumerative display means comprises means that displays a 'Delete' button to instruct deletion of a specified item from the registered wish list.

10. A gift mediation system in accordance with any one of claims 1 through 9, said gift mediation system further comprising:
display means that displays the wish list of the at least one item registered by said wish list registry means in an enumerative manner, in response to access using the password;
application means that individually accepts an offer of payment for each item included in the displayed wish list; and
offer record display means that displays an offer record of the item for which the payment has been offered.

11. A gift mediation system in accordance with claim 10, wherein said application means comprises partial payment application means that allows partial payment for a specific item displayed by said display means to be offered by the access using the password,
said gift mediation system further comprising:
total pay offer display means that displays a total of pay offer for the specific item.

12. A gift mediation system in accordance with either one of claims 10 and 11, said gift mediation system further comprising:
payment demand means that requires a giver who has offered the payment to actually pay for the item for which the payment has been offered.

13. A gift mediation system in accordance with any one of claims 10 through 12, said gift mediation system further comprising:
detailed information display means that displays the wish list of the at least one item registered by said wish list registry means in an enumerative manner, as well as information for authenticating the giver who has offered the payment with regard to the item for which the payment has been offered, in response to the access via the network authorized by said permission means.

14. A gift mediation system in accordance with any one of claims 10 through 13, said gift mediation system further comprising:
due time memory means that stores a due time of access to said data storage means;
due time detection means that detects elapse of the due time; and
notification means that notifies a registrant who has registered the wish list of information on the item for which the payment has been offered, in response to the detection of the elapse of the due time.

15. A gift mediation system in accordance with claim 14, wherein said first memory means comprises means that stores registry of an address for delivery of the item for which the payment has been offered and a postal address of the recipient who is expected to receive the gift, as the information on the recipient.

16. A gift mediation method of implementing gift mediation via a network through access to data storage means, which is provided on a server and stores predetermined data therein,
said gift mediation method comprising the steps of:
storing registry of information on a recipient, who is expected to receive gift, together with individual information used for authentication on the network in a predetermined storage device of said server;
storing a password used to authenticate a giver who desires to give the gift on the network in said storage device of said server;
identifying the individual information in response to a requirement for access via the network and giving authorization to access said data storage means via the network when identity with at least part of the individual information registered in said storage device is verified;
registering a wish list including at least one item for the gift into said data storage means by the authorized access; and
allowing the wish list to be referred to by access via the network using the password stored in said storage device.

17. A gift mediation system that implements gift mediation via a network through access to data storage means, which is provided on a server and stores predetermined data therein,
said gift mediation system comprising:
memory means that stores registry of information on a recipient, who is expected to receive gift, together with individual information used for authentication on the network;
authentication means that authenticates a giver who desires to give the gift on the network;
first permission means that identifies the individual information in response to a requirement for access via the network and gives authorization to access said data storage means via the network when identity with at least part of the individual information registered in said memory means is verified;
wish list registry means that specifies a wish list including at least one item for the gift, based on information regarding items other than the predetermined data stored in said data storage means, after the access authorized by said first permission means, and registers information on the specified wish list in said data storage means; and
wish list reference means that allows the wish list to be referred to by access identified on the network by said authentication means.

18. A gift mediation system in accordance with claim 17, said gift mediation system further comprising:
second permission means that gives authorization to access another data storage means, which is connected to said data storage means via the network, after the authorized access to said data storage means; and
item information acquisition means that obtains information on items stored in said another data storage means, in response to a specified instruction,
wherein said wish list registry means specifies the wish list of the at least one item for the gift, based on the information obtained by said item information acquisition means, and registers the information on the specified wish list in said data storage means.

19. A gift mediation system in accordance with claim 18, wherein said item information acquisition means obtains information on description of respective items, such as product names and product numbers of the items, as well as information on an address, at which the information on the items is stored in said another data storage means.

20. A gift mediation system in accordance with either one of claims 18 and 19, wherein said data storage means stores in advance information on items as the predetermined data,
said item information acquisition means obtains both the information on the items stored in advance in said data storage means and the information on the items stored in said another data storage means, and
said wish list registry means registers both the information obtained by said item information acquisition means on a common list in said data storage means.

21. A gift mediation system in accordance with claim 20, said gift mediation system further comprising:
display means that displays the information registered on the common list in said data storage means in an enumerative manner.

22. A gift mediation system in accordance with any one of claims 18 through 21, said gift mediation system further comprising:
settlement means that settles an account of each item included in the wish list, whose information is registered by said wish list registry means, between said server managing said data storage means and another server managing said another data storage means via the network.

23. A gift mediation system in accordance with claim 17, wherein a terminal that gains access to said data storage means via the network is installed at a shop of a retailer who sells items, and
said wish list registry means specifies the wish list of the at least one item for the gift, based on information on items checked at the shop by the recipient who is expected to receive the gift, after access authorized by said terminal, and registers information on the specified wish list in said data storage means.

24. A gift mediation method of implementing gift mediation via a network through access to data storage means, which is provided on a server and stores predetermined data therein,
said gift mediation method comprising the steps of:
storing registry of information on a recipient, who is expected to receive gift, together with individual information used for authentication on the network in a predetermined storage device of said server;
authenticating a giver who desires to give the gift on the network;
identifying the individual information in response to a requirement for access via the network and giving authorization to access said data storage means via the network when identity with at least part of the individual information registered in said memory means is verified;
specifying a wish list including at least one item for the gift, based on information regarding items other than the predetermined data stored in said data storage means, after the authorized access, and registering information on the specified wish list in said data storage means; and
allowing the wish list to be referred to by access identified on the network.

25. A recording medium, in which a program is recorded in a computer readable manner, said program being executed to gain access to data storage means, which is provided on a server and stores predetermined data therein, via a network and register an item for gift in said data storage means,
said program causing a computer to attain the functions of:
obtaining information on items stored in another data storage means by access to said another data storage means that is different from said data storage means, in response to a predetermined instruction; and
specifying a wish list including at least one item for the gift, based on the obtained information, and registering information on the specified wish list in said data storage means.
